# EUROPEAN PATENT APPLICATION

(11) **EP 4 753 362 A1**
(43) Date of publication of application: **03.06.2026**
(21) Application number: 25784569.3
(22) Date of filing: 26.09.2025
(51) Int. Cl.: H04W 76/12, H04W 76/18, H04W 12/06, H04W 12/08, H04W 84/12, H04W 76/10, H04W 72/20

(54) **ELECTRONIC DEVICE FOR PERFORMING CONNECTION WITH AP ON BASIS OF CHANGED CONFIGURATION, AND OPERATION METHOD OF ELECTRONIC DEVICE**

(30) Priority: 07.10.2024 KR 20240135694; 22.10.2024 KR 20240145271
(71) Applicant: Samsung Electronics Co., Ltd., Suwon-si, Gyeonggi-do 16677 (KR)
(72) Inventor: NAM, Chounjong, Suwon-si, Gyeonggi-do 16677 (KR); KANG, Minho, Suwon-si, Gyeonggi-do 16677 (KR); YOON, Jaeho, Suwon-si, Gyeonggi-do 16677 (KR); LEE, Sunkee, Suwon-si, Gyeonggi-do 16677 (KR); LEE, Sunghee, Suwon-si, Gyeonggi-do 16677 (KR); CHOI, Seongsu, Suwon-si, Gyeonggi-do 16677 (KR)
(74) Representative: Walaski, Jan Filip
(86) International application number: PCT/KR2025/015205
(87) International publication number: WO 2026/079759

(57) **Abstract**

In an electronic device and a method for operating an electronic device according to an embodiment, the electronic device may include a communication circuit supporting short-range wireless communication. The electronic device may include memory storing at least one computer program. The electronic device may include at least one processor. The at least one computer program may include instructions, when executed by the at least one processor individually or collectively, to cause the electronic device to transmit, to an access point (AP), a first association request frame including a configuration supportable by the electronic device, in a procedure of connecting the AP to the electronic device. The instructions, when executed by the at least one processor individually or collectively, may cause the electronic device to receive, from the AP, an association response frame indicating that the connection between the AP and the electronic device has failed. The instructions, when executed by the at least one processor individually or collectively, may cause the electronic device to transmit, to the AP, a second association request frame including a configuration in which at least some of the configurations supportable by the electronic device are modified. The instructions, when executed by the at least one processor individually or collectively, may cause the electronic device to store the modified configuration in memory when the connection between the AP and the electronic device is successful.

## Description

### [Technical Field]

The disclosure relates to an electronic device and a method for operating an electronic device, and more particularly, to an electronic device for performing a connection to an access point (AP) based on a modified configuration.

### [Background Art]

With the proliferation of various electronic devices, improvements in the speed of wireless communication available to these electronic devices have been achieved. Among the wireless communications supported by recent electronic devices, IEEE 802.11 WLAN (or, Wi-Fi) is a standard for implementing high-speed wireless connections on various electronic devices. The initial implemented Wi-Fi may support a transmission speed of up to 1 to 9 Mbps, while the Wi-Fi 6 technology (or, IEEE 802.11ax) may support a transmission speed of up to about 10 Gbps.

The electronic device may support various services (for example, UHD video streaming service, augmented reality (AR) service, virtual reality (VR) service, or mixed reality (MR) service) using relatively large data through wireless communication that supports a high transmission speed, and also support various other services.

The electronic device may be connected to an AP capable of providing short-range wireless communication via short-range wireless communication. In order to be connected to the AP via the short-range wireless communication, the electronic device may perform a discovery process to discover the AP, an authentication process to perform authentication with the discovered AP, an association process to negotiate whether to activate a function related to the short-range wireless communication, and/or a security process.

### [Disclosure of Invention]

### [Technical Problem]

While performing the authentication process and/or the association process with the AP, the electronic device may transmit a frame (e.g., an authentication request frame or an association request frame) including configurations related to the short-range wireless communication supported by the electronic device to the AP. The AP may perform the authentication process and/or the association process based on the configurations related to the short-range wireless communication.

However, the electronic device and the AP may fail the authentication process and/or the association process for various reasons. When the authentication process and/or the association process fails, the AP may transmit a response frame (e.g., an authentication response frame or an association response frame) including information (e.g., a status code) related to the reasons for failure to the electronic device.

The status code may include the information related to the reasons for which the association has failed, and the specific code is defined in IEEE 802.11. However, the status code may only include some of the pieces of information related to the reasons for which the association between the electronic device and the AP has failed, and does not include information indicating the configuration that the electronic device should modify in order to successfully authenticate and/or associate between the electronic device and the AP. Even if the electronic device receives the authentication response frame or the association response frame including the status code, it may be difficult to accurately identify the reasons for which the association between the electronic device and the AP has failed. Furthermore, most APs are implemented to transmit an association response frame including a status code (e.g., status code 1; unspecified reason) that does not specify the reasons for which the authentication or association has failed, and as a result, the electronic device may have difficulty accurately identifying the reasons for which the association between the electronic device and the AP has failed.

Even though the electronic device requires modifying the configurations related to the short-range wireless communication in order to successfully connect to the AP, the electronic device may transmit a request frame including unmodified configurations to the AP, and the connection between the AP and the electronic device may continuously fail. The electronic device may not be able to perform the short-range wireless communication provided by the AP, and the quality of the service using the short-range wireless communication may be degraded.

The technical problems to be addressed by the present disclosure are not limited to the above-described technical problems. That is, other technical problems that are not described may be obviously understood by those skilled in the art to which the present disclosure pertains from the following description.

### [Solution to Problem]

According to an embodiment, an electronic device may include a communication circuit supporting short-range wireless communication. The electronic device may include memory storing at least one computer program. The electronic device may include at least one processor. The at least one computer program may include instructions, when executed by the at least one processor individually or collectively, to cause the electronic device to transmit, to an access point (AP), a first association request frame including a configuration supportable by the electronic device, in a procedure of connecting the AP to the electronic device. The instructions, when executed by the at least one processor individually or collectively, may cause the electronic device to receive, from the AP, an association response frame indicating that the connection between the AP and the electronic device has failed. The instructions, when executed by the at least one processor individually or collectively, may cause the electronic device to transmit, to the AP, a second association request frame including the configuration in which at least some of the configurations supportable by the electronic device are modified. The instructions, when executed by the at least one processor individually or collectively, may cause the electronic device to store the modified configuration in memory when the connection between the AP and the electronic device is successful.

There is provided a recording medium storing at least one program including instructions that, when executed by at least one processor of an electronic device individually or collectively, cause the electronic device to perform the following operations, in which the instructions, when executed by the at least one processor individually or collectively, may cause the electronic device to transmit, to an access point (AP), a first association request frame including a configuration supportable by the electronic device, in a procedure of connecting the AP to the electronic device. The instructions, when executed by the at least one processor individually or collectively, may cause the electronic device to receive, from the AP, an association response frame indicating that the connection between the AP and the electronic device has failed. The instructions, when executed by the at least one processor individually or collectively, may cause the electronic device to transmit, to the AP, a second association request frame including the configuration in which at least some of the configurations supportable by the electronic device are modified. The instructions, when executed by the at least one processor individually or collectively, may cause the electronic device to store the modified configuration in memory of the electronic device when the connection between the AP and the electronic device is successful.

According to an embodiment, a method for operating an electronic device may include transmitting, to an access point (AP), a first association request frame including a configuration supportable by the electronic device, in a procedure of connecting the AP to the electronic device. The method for operating an electronic device may include receiving, from the AP, an association response frame indicating that the connection between the AP and the electronic device has failed. The method for operating an electronic device may include transmitting, to the AP, a second association request frame including information indicating a configuration in which at least some of the configurations supportable by the electronic device are modified. The method for operating an electronic device may include storing the modified configuration in the memory of the electronic device when the connection between the AP and the electronic device is successful.

### [Advantageous Effects of invention]

According to the electronic device and the method for operating an electronic device according to an embodiment, when the connection between the electronic device and the AP fails, the electronic device may attempt to establish the connection to the AP using different configurations by transmitting, to the AP, the association request frame including information indicating the configuration in which at least some of the configurations related to the short-range wireless communication supported by the electronic device are modified. Therefore, the electronic device may improve a connection success rate with the AP.

According to an embodiment, the electronic device and the method for operating an electronic device may transmit, to the AP, the association request frame including the information indicating the modified configuration that excludes information supporting at least one of the protocols supported by the electronic device from the configurations related to the short-range wireless communication supported by the electronic device. As the highest generation (or the latest) protocol is used, the compatibility issues (or problems) may arise more frequently between the AP and the electronic device. Accordingly, the electronic device may improve the connection success rate by attempting to establish the connection to the AP using the protocol of the lower generation than the highest generation.

The electronic device and the method for operating an electronic device according to an embodiment may transmit, to the AP, the association request frame including the information indicating the modified configuration that excludes information supporting at least one of the security types supported by the electronic device from the configuration related to the short-range wireless communication supported by the electronic device. The more secure the security type used, the more frequently compatibility issues (or problems) may arise between the AP and the electronic device. Therefore, the electronic device may reduce the connection failure probability occurring by attempting to establish the connection to the AP using the security type with lower security.

Effects which can be achieved by the present disclosure are not limited to the above-described effects. That is, other effects that are not described may be obviously understood by those skilled in the art to which the present disclosure pertains from the following description.

### [Brief Description of Drawings]

FIG. 1 is a block diagram of an electronic device according to an embodiment.
FIG. 2 illustrates an example of a wireless LAN system according to an embodiment.
FIG. 3 is a diagram for describing an example of a link setup operation according to an embodiment.
FIG. 4A is a diagram illustrating an example in which an electronic device according to an embodiment fails an authentication procedure between the electronic device and an AP.
FIG. 4B is a diagram illustrating an example in which the electronic device according to an embodiment fails an association procedure between the electronic device and the AP.
FIG. 5 is a block diagram of the electronic device according to an embodiment.
FIG. 6 is a diagram illustrating an example in which the electronic device according to an embodiment transmits a second association request frame including information indicating a configuration in which at least some of the configurations related to short-range wireless communication supportable by the electronic device are modified.
FIG. 7 is a diagram illustrating an example in which an electronic device according to an embodiment transmits the second association request frame including information indicating a configuration that excludes information indicating support for at least one of the protocols of short-range wireless communication supportable by the electronic device.
FIG. 8 is a diagram illustrating an example in which the electronic device according to an embodiment transmits the second association request frame including information indicating a configuration that excludes information indicating support for at least one of the security types of short-range wireless communication supportable by the electronic device.
FIG. 9 is a diagram illustrating an example in which the electronic device according to an embodiment transmits the second association request frame including information indicating a configuration that modifies whether at least some of the functions of short-range wireless communication supportable by the electronic device are activated.
FIG. 10 is an operational flowchart illustrating a method for operating an electronic device according to an embodiment.

### [Mode for the Invention]

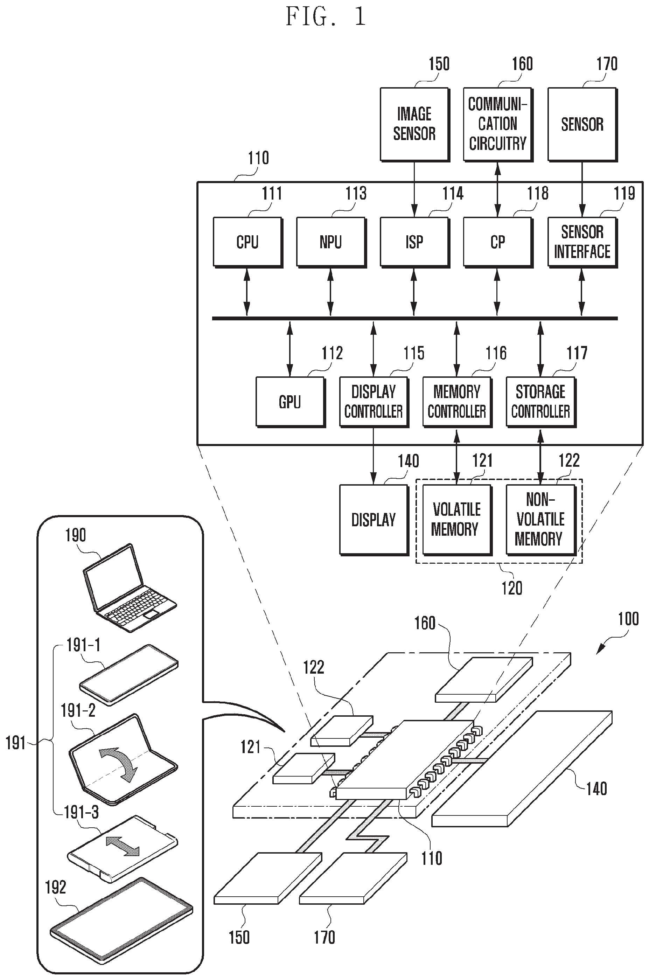

FIG. 1 illustrates a block diagram of an exemplary electronic device 100 capable of performing the operations described herein.

Referring to FIG. 1, the electronic device 100 may be one of various types of electronic devices, such as a notebook computer 190, smartphones 191 having various form factors (e.g., a bar-type smartphone 191-1, a foldable smartphone 191-2, or a slidable (or rollable) smartphone 191-3), a tablet PC 192, a cellular telephone (not shown), and any other similar computing devices (not shown). The components illustrated in FIG. 1, the relationships thereof, and the functions thereof are merely for illustration, and are not intended to limit the implementations described or claimed in the disclosure thereto. The electronic device 100 may be referred to as a mobile device, a user equipment, a multifunctional device, a portable device, or a server.

The electronic device 100 may comprise various components including at least one processor 110 (hereinafter, the processor 110), at least one memory 120 (hereinafter, the memory 120), at least one display 140 (hereinafter, the display 140), at least one image sensor 150 (hereinafter, the image sensor 150), at least one communication circuitry 160 (hereinafter, the communication circuitry 160), and/or at least one sensor 170 (hereinafter, the sensor 170). The aforementioned components are merely of an example. For example, the electronic device 100 may comprise other components (e.g., a power management integrated circuitry (PMIC), an audio processing circuitry, an antenna, a rechargeable battery, or an input/output interface). For example, some components may be omitted from the electronic device (100). For example, some components may be integrated into one component.

The processor 110 may be implemented as one or more integrated circuit (or circuitry) (IC) chips and may perform various data processing. The processor 110 may include at least one electrical circuitry and may process instructions (or program, data, and so on) stored in the memory 120 individually or collectively in a distributed manner. The processor 110 may include a processor assembly that includes one or more processing circuitries. The processor may include any processing circuitry that may be operative for controlling operations and performance of one or more components (e.g., the memory 120, a display 140, the image sensor 150, the communication circuitry 160, and/or the sensor 170) of the electronic device. For example, the processor 110 (e.g., an application processor (AP)) may be implemented as a system on chip (SoC) (e.g., one chip or chipset). For example, the processor 110 may be implemented as a plurality of cores (or at least one core circuitry), a plurality of chips, or a plurality of chipsets. For example, the processor 110 may comprise one or more processing circuitry. For example, the processor 110 may comprise one or more processing circuitry which are individually and/or collectively configured to perform various functions of the present disclosure. As a non-limiting example, at least a portion of the processor 110 may be included in a first chip of the electronic device 100 and at least another portion of the processor 110 may be included in a second chip of the electronic device 100 different from the first chip of the electronic device 100.

For example, the processor 110 may comprise a central processing unit (CPU) 111, a graphics processing unit (GPU) 112, a neural processing unit (NPU) 113, an image signal processor (ISP) 114, a display controller 115, a memory controller 116, a storage controller 117, a communication processor (CP) 118, and/or a sensor interface 119. These components of the processor 110 are merely of an example. For example, the processor 110 may further comprise other components. For example, some components of the processor 110 may be omitted from the processor 110. For example, some components of the processor 110 may be included as separate components of the electronic device 100 outside the processor 110. For example, some components of the processor 110 (e.g., the memory controller 116) may be included in other components of the electronic device 100 (e.g., at least a portion of the memory 120, an interface (e.g., usable for connecting to at least one component of the electronic device 100), the display 140, and/or the image sensor 150).

The processor 110 may cause other components of the electronic device 100 to perform various operations by executing instructions stored in the memory 120. The CPU 111 (or a central processing circuitry) may be configured to control the components of the processor 110 based on execution of instructions stored in the memory 120 (e.g., the volatile memory 121 and/or the non-volatile memory 122). The GPU 112 (or a graphic processing circuitry) may be configured to execute parallel computations (e.g., rendering). The NPU 113 (or a neural processing circuitry, or an artificial intelligence (AI) chip) may be configured to execute operations (e.g., convolution computations) for an artificial intelligence model. The ISP 114 (or an image signal processing circuitry) may be configured to process a raw image obtained from the image sensor 150 in a format suitable for a component in the electronic device 100 or a component of the processor 110. The display controller 115 (or a display control circuitry, or a display processing unit (DPU)) may be configured to process an image obtained from the CPU 111, the GPU 112, the ISP 114, or the memory 120 (e.g., the volatile memory 121) in a format suitable for the display 140. The memory controller 116 (or a memory control circuitry) may be configured to control reading data from the volatile memory 121 and writing data to the volatile memory 121. The storage controller 117 (or a storage control circuitry) may be configured to control reading data from the non-volatile memory 122 and writing data to the non-volatile memory 122. The CP 118 (or a communication processing circuitry) may be configured to process data obtained from a component of the processor 110 in a format suitable for transmission to another electronic device via the communication circuitry 160, or to process data obtained from another electronic device via the communication circuitry 160 in a format suitable for processing of the component of the processor 110. For example, the communication circuitry 160 may comprise one or more communication circuitry. The sensor interface 119 (or a sensing data processing circuitry, a sensor hub) may be configured to process data on a state of the electronic device 100 and/or a state around the electronic device 100, obtained through the sensor 170, in a format suitable for a component of the processor 110.

The memory 120 may comprise one or more storage mediums (or one or more storage devices). For example, the memory 120 may include a memory assembly that includes one or more storage mediums. For example, the one or more storage mediums may comprise a permanent memory (e.g., the non-volatile memory 122) such as a hard drive, a flash memory, a read-only memory (ROM), a semi-permanent memory (e.g., the volatile memory 121) such as a random access memory (RAM), a storage (or a storage assembly) of any other suitable type, or any combination thereof. The memory 120 may comprise a cache memory which is a memory of one or more different types used to store data for performing a function or feature of the electronic device 100 at least temporarily. As a non-limiting example, the cache memory may be included in the processor 110. The memory 120 may be fixedly embedded within the electronic device 100, or may be incorporated onto one or more suitable types of components that may be repeatedly inserted into the electronic device 100, and removed from the electronic device 100 (e.g., a subscriber identity module (SIM) card, and/or a secure digital (SD) card).

For example, the memory 120 may store one or more software applications such as an operating system (or a system) software application, a firmware software application, a driver software application, a plug-in (e.g., add-in, add-on, and/or applet) software application, and/or any other suitable software application. For example, the one or more software applications may include instructions executable by the processor 110. For example, the memory 120 may store instructions callable by an application programming interface (API). For example, the memory 120 may store instructions in a library.

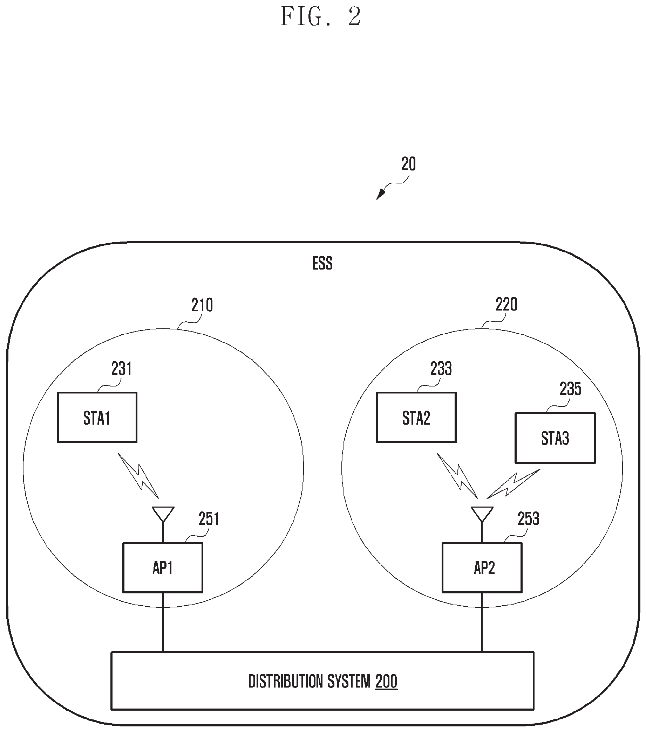

FIG. 2 illustrates an example of a wireless LAN system according to an embodiment.

Referring to FIG. 2, according to an embodiment, a wireless LAN system 20 may represent an infrastructure mode in which at least one access point (AP) and a station (STA) communicating through the AP exist in the structure of a wireless local area network (WLAN) of the Institute of Electrical and Electronic Engineers (IEEE) 802.11 standard. The wireless LAN system 20 may include one or more basic service sets (BSSs) (e.g., BSS1 210 and/or BSS2 220). The BSS (e.g., BSS1 210 and/or BSS2 220) may refer to a set of APs and STAs (e.g., electronic devices 100 of FIG. 1) that are successfully synchronized and may communicate with each other. For example, the BSS1 210 may include AP1 251 and STA1 231, and the BSS2 220 may include two or more STAs (e.g., STA2 233 and STA3 235) that may be coupled to one AP2 253.

According to an embodiment, the wireless LAN system 20 may include at least one STA (e.g., STA1 231, STA2 233, and/or STA3 235), at least one AP (e.g., AP1 251 and/or AP2 253) that provides access to a distribution system service, and/or a distribution system 200 that connects multiple APs (e.g., AP1 251 and AP2 253). The distribution system 200 may refer to a network, generally a wired infrastructure, to which the AP (e.g., AP1 251, AP2 253) is connected. The distribution system 200 may implement an extended service set (ESS) by connecting at least one BSS (e.g., BSS1 210 and/or BSS2 220). The ESS may be used as a term indicating a network formed by connecting one or more APs (e.g., AP1 251 and/or AP2 253) through the distribution system 200. Multiple APs (e.g., AP1 251 and AP2 253) included in one ESS may have the same service set identification (SSID).

According to an embodiment, the STA (e.g., STA1 231, STA2 233, and/or STA3 235) may be a logical entity that includes a medium access control (MAC) and a physical layer interface to a wireless medium according to the specifications defined in the IEEE 802.11 standard. The STA may be used as meaning including both an AP-STA and a non-AP STA. However, in this specification, for convenience of description, the STA may refer to the non-AP STA, and the AP may refer to the AP-STA. The STA (e.g., STA1 231, STA2 233, and/or STA3 235) may also be referred to by various names such as an electronic device, a mobile terminal, a wireless device, a wireless transmit/receive unit (WTRU), a user equipment (UE), a mobile station (MS), a mobile subscriber unit, or simply a user, and may be included in these devices.

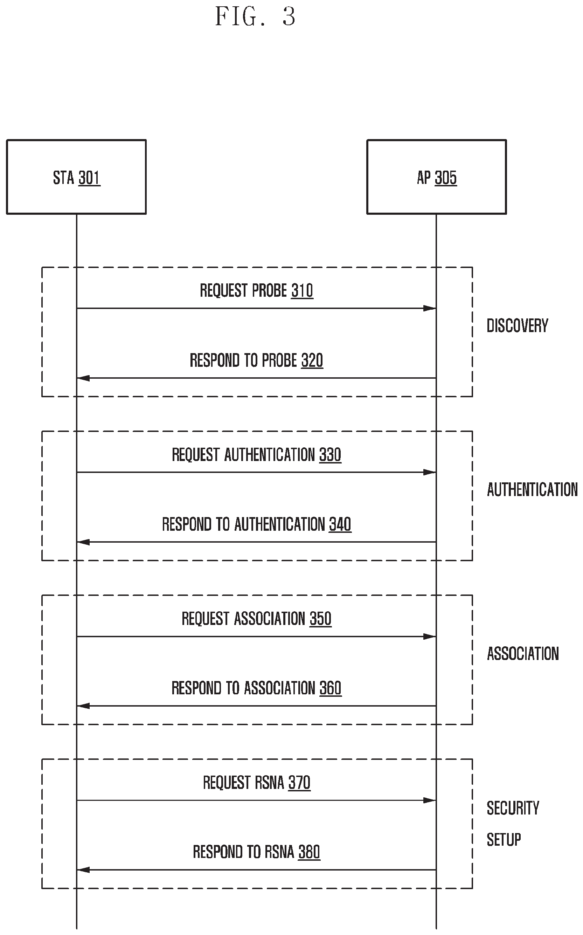

FIG. 3 is a diagram for describing an example of a link setup operation according to an embodiment.

Referring to FIG. 3, according to an embodiment, the link setup operation may be performed between the devices (e.g., STA 301, AP 305) to perform communication with each other. For the link setup, the network may be discovered, authentication may be performed, an association may be established, and a configuration operation for security may be performed. The link setup operation may be referred to as a session initiation operation or a session setup operation. In addition, the operations of discovery, authentication, association, and security configuration of the link setup operation may be collectively referred to as an association operation.

According to an embodiment, the network discovery operation may include operations 310 and 320. In operation 310, the STA 301 (e.g., the electronic device 100 of FIG. 1) may transmit a probe request frame to search for whether any AP exists and wait for a response to the probe request frame. The STA 301 may perform a scanning operation to discover available networks in order to access a network. For example, the probe request frame may include information (e.g., a device name and/or an address of the STA 301) of the STA 301. The scanning operation in operation 310 may refer to an active scanning operation. In operation 320, the AP 305 may transmit a probe response frame to the STA 301 that has transmitted the probe request frame as a response to the probe request frame. For example, the probe response frame may include information (e.g., the device name and/or network information of the AP 305) of the AP 305. The network discovery operation in FIG. 3 is illustrated as being performed through active scanning, but is not necessarily limited thereto. For example, the network discovery operation may also be performed through passive scanning. When the STA 301 performs the passive scanning, the operation of transmitting the probe request frame may be omitted. The STA 301 performing the passive scanning may receive a beacon frame transmitted by the AP 305 and perform the following subsequent procedures. The beacon frame may be a frame periodically broadcast by the AP 305 to notify the existence of the BSS that the AP 305 manages. For example, the beacon frame may include information on at least one of a timestamp, a beacon interval and cycle, capability information, and an SSID for synchronization of at least one STA including the STA 301.

According to an embodiment, after the STA 301 discovers a network, the authentication operation including operations 330 and 340 may be performed. In operation 330, the STA 301 may transmit an authentication request frame to the AP 305. In operation 340, the AP 305 may determine whether to allow authentication for the corresponding STA 301 based on information included in the authentication request frame. The AP 305 may provide the authentication processing result to the STA 301 through an authentication response frame. An authentication frame (e.g., the authentication request frame and/or the authentication response frame) used for the authentication request/response may correspond to a management frame.

According to an embodiment, the authentication frame may include information on an authentication algorithm number, an authentication transaction sequence number, a status code, a challenge text, a robust security network (RSN), and/or a finite cyclic group.

According to an embodiment, after the STA 301 is successfully authenticated, an association operation including operations 350 and 360 may be performed. In operation 350, the STA 301 may transmit an association request frame to the AP 305. In operation 360, the AP 305 may transmit an association response frame to the STA 301 in response to the association request frame.

According to an embodiment, the association request frame and/or the association response frame may include information related to various capabilities. Examples of the association request frame includes information related to various capabilities, and information related to a beacon listening interval, a service set identifier (SSID), supported rates, supported channels, RSN, mobility domain, supported operating classes, a traffic indication map (TIM) broadcast request, and/or interworking service capability. Examples of the association response frame may include information related to various capabilities, and information related to a status code, an association ID (AID), a support rate, an enhanced distributed channel access (EDCA) parameter set, a received channel power indicator (RCPI), a received signal to noise indicator (RSNI), a mobility domain, a timeout interval (association comeback time), an overlapping BSS scan parameter, a TIM broadcast response, and/or a QoS map.

According to an embodiment, after the STA 301 is successfully associated with the network, a security setup operation including operations 370 and 380 may be performed. The security setup operation may be performed through a robust security network association (RSNA) request/response. Examples of the security setup operation may include an operation of performing private key setup through 4-way handshaking through an extensible authentication protocol over LAN (EAPOL) frame. The security setup operation may also be performed according to a security scheme not defined in the IEEE 802.11 standard.

According to an embodiment, a security session is configured between the STA 301 and the AP 305 according to the security setup operation, and the STA 301 and the AP 305 may perform secure data communication.

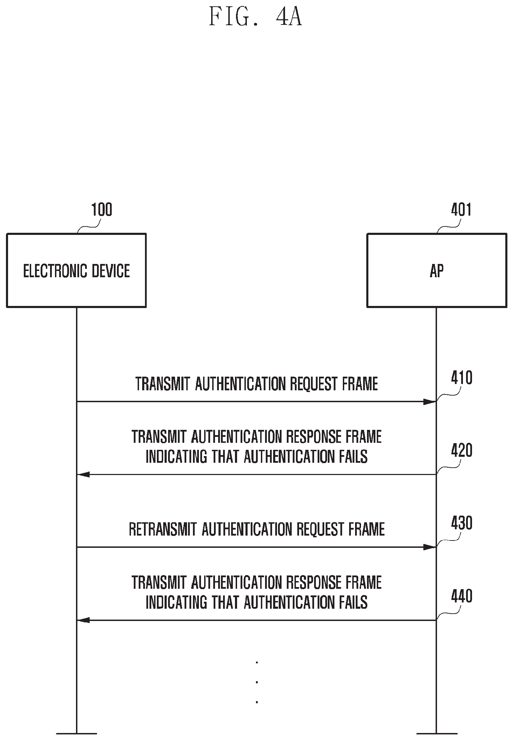

FIG. 4A is a diagram illustrating an example in which the electronic device according to an embodiment fails an authentication procedure between the electronic device and the AP.

In operation 410, the electronic device 100 (e.g., the electronic device 100 of FIG. 1, the STA1 231 of FIG. 2, the STA 301 of FIG. 3) may transmit the authentication request frame to the AP 401 (e.g., the AP1 251 of FIG. 2, the AP 305 of FIG. 3).

The electronic device 100 may be included in the BSS (e.g., the BSS1 210 of FIG. 2) including the AP 401, and the electronic device 100 may perform the STA role defined in IEEE 802.11. The electronic device 100 may transmit data to the outside and/or receive data from the outside through short-range wireless communication (e.g., Wi-Fi) provided by the AP 401.

The electronic device 100 may discover the AP 401 in order to perform the short-range wireless communication provided by the AP 401. The electronic device 100 may broadcast a probe request message in order to search for the AP.

The probe request message may include information on the electronic device 100. According to one example, the probe request message may include various types of identification information (e.g., MAC address) that may distinguish the electronic device 100 from other electronic devices, and performance information related to the short-range wireless communication of the electronic device 100. When receiving the probe request message, the AP 401 may transmit a probe response message corresponding to the probe request message to the electronic device 100. The electronic device 100 may be successful in searching for the AP 401 when receiving the probe response message.

The electronic device 100 may perform an authentication procedure with the discovered AP 401. The electronic device 100 may transmit the authentication request frame to the AP 401.

According to an embodiment, the authentication frame may include the information on the authentication algorithm number, the authentication transaction sequence number, the status code, the challenge text, the robust security network (RSN), and/or the finite cyclic group.

In operation 420, the AP 401 may transmit the authentication response frame to the electronic device 100.

The AP 401 may perform the authentication with the electronic device 100 based on the information related to the authentication included in the authentication request frame transmitted by the electronic device 100. However, the AP 401 may fail authentication between the electronic device 100 and the AP 401 for various reasons. According to one example, the AP 401 may be an AP with relatively low performance related to compatibility, and may fail the authentication with the electronic device 100.

When the authentication with the electronic device 100 fails, the AP 401 may transmit the authentication response frame indicating that the authentication has failed to the electronic device 100.

The authentication response frame indicating that the authentication has failed may include a status code (status code) related to the failure of authentication. The status code may include the information related to the reasons for which the authentication has failed, and the specific code is defined in IEEE 802.11. However, the status code may include only some information related to the reason for the authentication failure between the electronic device 100 and the AP 401, and does not include information indicating the configuration that the electronic device 100 should modify in order to successfully authenticate between the electronic device 100 and the AP 401. Even if the electronic device 100 receives the authentication response frame including the status code, it may be difficult to accurately identify the reason for the authentication failure between the electronic device 100 and the AP 401. Furthermore, most APs 401 are implemented to transmit the authentication response frame including the status code (e.g., status code 1; unspecified reason) that does not specify the reason for the authentication failure, so it may be difficult for the electronic device 100 to accurately identify the reason for the authentication failure between the electronic device 100 and the AP 401.

In operation 430, the electronic device 100 may retransmit the authentication request frame to the AP 401.

As described above, the electronic device 100 may not be able to identify the reason for the authentication failure between the electronic device 100 and the AP 401, and may transmit, to the AP 401, the authentication request frame including the same information related to the authentication as the information included in the authentication request frame transmitted in operation 410.

However, the AP 401 may receive the authentication request frame including the same information related to the authentication as the information included in the authentication request frame transmitted in operation 410, and the authentication between the electronic device 100 and the AP 401 may fail.

In operation 440, the AP 401 may transmit the authentication response frame indicating that the authentication has failed to the electronic device 100.

The electronic device 100 may not be able to be connected to the AP 401 through the short-range wireless communication because the authentication procedure between the electronic device 100 and the AP 401 has failed, and may not be able to continuously perform the short-range wireless communication provided by the AP 401. The situation in which the authentication procedure between the electronic device 100 and the AP 401 repeatedly fails may make it difficult for the electronic device 100 to perform a service using the short-range wireless communication.

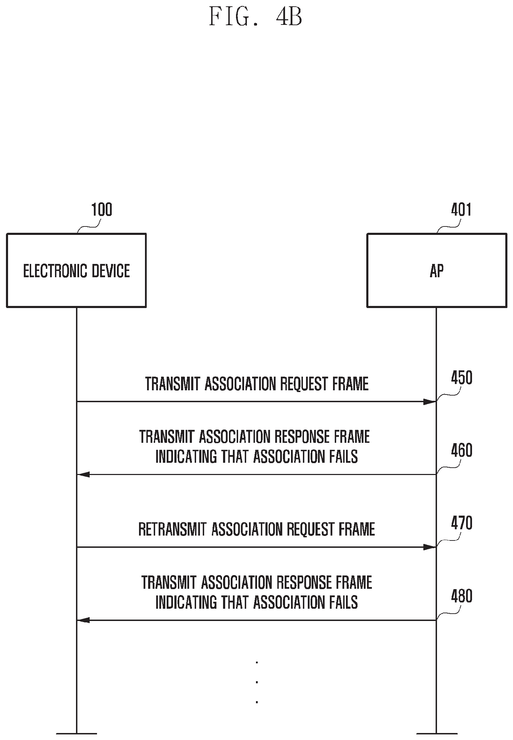

FIG. 4B is a diagram illustrating an example in which the electronic device according to an embodiment fails an association procedure between the electronic device and the AP.

In operation 450, the electronic device 100 (e.g., the electronic device 100 of FIG. 1, the STA1 231 of FIG. 2, the STA 301 of FIG. 3) may transmit the association request frame to the AP 401 (e.g., the AP1 251 of FIG. 2, the AP 305 of FIG. 3).

The electronic device 100 may discover the AP 401 and perform an authentication operation with the discovered AP 401. When the authentication between the AP 401 and the electronic device 100 is successful, the electronic device 100 may perform the association procedure. The association procedure may refer to a procedure in which the electronic device 100 and the AP 401 negotiate configurations related to the short-range wireless communication.

The association request frame may include information indicating a configuration related to the short-range wireless communication supportable by the electronic device 100.

According to one example, the association request frame may include protocol information of the short-range wireless communication supportable by the electronic device 100. For example, when the electronic device 100 supports all the short-range wireless communications including Wi-Fi 7, the electronic device 100 may transmit, to the AP 401, the association request frame indicating that the electronic device 100 supports Wi-Fi 7, Wi-Fi 6E, Wi-Fi 5, Wi-Fi 4, Wi-Fi 3, Wi-Fi 2, and/or Wi-Fi 1.

According to one example, the association request frame may include information indicating a security type of the short-range wireless communication supportable by the electronic device 100. For example, when the electronic device 100 supports an encryption scheme using any one of Wi-Fi protected access 3 (WPA 3), WPA2, WAP1, fast-time phase shift keying (FT-PSK), PSK, and/or OWE, the electronic device 100 may transmit, to the AP 401, the association request frame indicating that the electronic device 100 supports the Wi-Fi protected access 3 (WPA 3), the WPA2, the WAP1, the fast-time phase shift keying (FT-PSK), the PSK, and/or the OWE.

According to one example, the association request frame may include information indicating whether to activate functions of the short-range wireless communication supportable by the electronic device 100. The functions of the short-range wireless communication supportable by the electronic device 100 may refer to various functions that the electronic device 100 and the AP 401 may activate through the negotiation in the association procedure. For example, the functions of the short-range wireless communication may include at least one of BSS transition management (BTM), beacon report, and/or neighbor report that may report information on neighboring APs. Examples of the association request frame includes information related to various capabilities, and information related to a beacon listening interval, a service set identifier (SSID), supported rates, supported channels, RSN, mobility domain, supported operating classes, a traffic indication map (TIM) broadcast request, and/or interworking service capability.

The AP 401 may receive the association request frame transmitted by the electronic device 100, and configure (or set up) the short-range wireless communication between the electronic device 100 and the AP 401 based on the information indicating the configuration supportable by the electronic device 100, which is included in the association request frame. However, the AP 401 may fail to associate between the electronic device 100 and the AP 401 for various reasons. According to one example, at least some of the configurations supportable by the electronic device 100 may conflict with the configuration supportable by the AP 401, and the association between the electronic device 100 and the AP 401 may fail.

In operation 460, the AP 401 may transmit, to the electronic device 100, the association response frame indicating that the association between the electronic device 100 and the AP 401 has failed.

The association response frame indicating that the association has failed may include the status code related to the association failure. The status code may include the information related to the reasons for which the association has failed, and the specific code is defined in IEEE 802.11. However, the status code may include only some information related to the reason for the association failure between the electronic device 100 and the AP 401, and does not include information indicating the configuration that the electronic device 100 should modify in order to successfully associate between the electronic device 100 and the AP 401. Even if the electronic device 100 receives the association response frame including the status code, it may be difficult to accurately identify the reason for failure of association between the electronic device 100 and the AP 401. Furthermore, most APs 401 are implemented to transmit the association response frame including the status code (e.g., status code 1; unspecified reason) that does not specify the reason for the association failure, so it may be difficult for the electronic device 100 to accurately identify the reason for the association failure between the electronic device 100 and the AP 401.

In operation 470, the electronic device 100 may retransmit the association request frame to the AP 401.

As described above, since the electronic device 100 may not identify the reason for the association failure between the electronic device 100 and the AP 401, the electronic device 100 may transmit, to the AP 401, the association request frame including the same information as the information indicating the configuration supportable by the electronic device 100, which is included in the association request frame transmitted in operation 450. The AP 401 attempts to establish the association using the same information as the information indicating the configuration supportable by the electronic device 100, which is included in the association request frame transmitted in operation 450, and the association between the electronic device 100 and the AP 401 may fail again.

In operation 480, the AP 401 may transmit, to the electronic device 100, the association response frame indicating that the association has failed.

The electronic device 100 may not be able to be connected to the AP 401 through the short-range wireless communication because the association procedure between the electronic device 100 and the AP 401 has failed, and may not be able to continuously perform the short-range wireless communication provided by the AP 401. The situation in which the association procedure between the electronic device 100 and the AP 401 repeatedly fails may make it difficult for the electronic device 100 to perform a service using the short-range wireless communication.

The examples illustrated in FIGS. 4A and 4B may be examples that occur because it is difficult for the electronic device 100 to accurately identify the reason for the failure in the authentication procedure and/or association procedure between the electronic device 100 and the AP 401. Hereinafter, examples are described in which, when the authentication procedure and/or the association procedure between the electronic device 100 and the AP 401 fails, the electronic device 100 modifies the configuration supportable by the electronic device 100 and transmits the association request frame including the modified configuration, thereby making the connection between the AP 401 and the electronic device 100 successful.

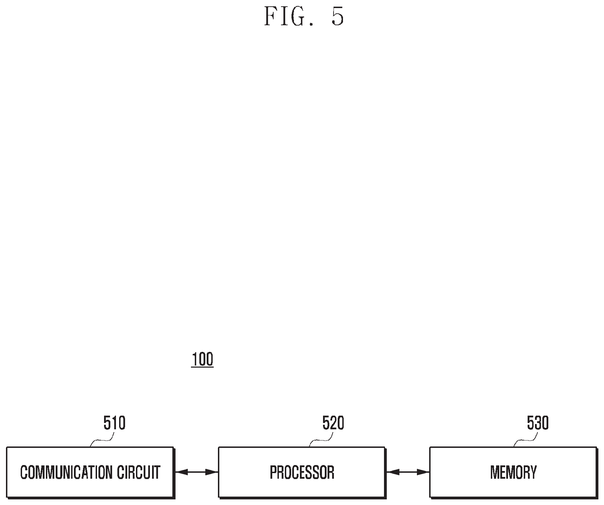

FIG. 5 is a block diagram of the electronic device according to an embodiment.

According to an embodiment, the electronic device (e.g., an electronic device 100 of FIG. 1) may include a communication circuit 510 (e.g., a communication circuit 160 of FIG. 1), a processor 520 (e.g., a processor 110 of FIG. 1), and/or a memory 530 (e.g., the memory 120 of FIG. 1).

The communication circuit 510 may be the communication circuit that supports the short-range wireless communication. The short-range wireless communication may include various short-range wireless communications supportable by the electronic device 100. For example, the short-range wireless communication may be Wi-Fi.

The communication circuit 510 may include various circuit structures used for modulating and/or demodulating signals within the electronic device 100. For example, the communication circuit 510 may modulate a baseband signal into a signal in a radio frequency (RF) band to be output through an antenna (not illustrated), or may demodulate a signal in an RF band received through an antenna into a signal in a baseband and transmit the modulated or demodulated signal to the processor 520.

The processor 520 may be electrically or operatively connected to the communication circuit 510 and control the communication circuit 510. The processor 520 may include at least one processor, and at least one processor may individually or collectively perform the following operations. The processor 520 may be the processor 110 illustrated in FIG. 1. Alternatively, the processor 520 may be a processor implemented within the communication circuit 510, and when the processor 520 is implemented within the communication circuit 510, the processor 520 may be referred to as a core.

The memory 530 may store instructions that may be executed by the processor 520. The operation of the processor 520 described below may be performed according to the execution of the instructions stored in the memory 530.The electronic device 100 may be included in the BSS (e.g., BSS1 210 of FIG. 2) that includes the AP (e.g., AP 401 of FIG. 4A), and the electronic device 100 may perform the STA role defined in IEEE 802.11. The electronic device 100 may transmit data to the outside and/or receive data from the outside through the short-range wireless communication (e.g., Wi-Fi) provided by the AP 401.

The electronic device 100 (e.g., processor 520) may discover the AP 401 through the communication circuit 510 in order to perform the short-range wireless communication provided by the AP 401. The electronic device 100 may control the communication circuit 510 to broadcast the probe request message in order to search for an AP.

The probe request message may include the information on the electronic device 100. According to one example, the probe request message may include various types of identification information (e.g., MAC address) that may distinguish the electronic device 100 from other electronic devices, and the performance information related to the short-range wireless communication of the electronic device 100. When receiving the probe request message, the AP 401 may transmit the probe response message corresponding to the probe request message to the electronic device 100. The electronic device 100 may be successful in searching for the AP 401 when receiving the probe response message.

The processor 520 may perform the authentication procedure with the discovered AP 401. The processor 520 may control the communication circuit 510 to transmit the authentication request frame to the AP 401.

According to an embodiment, the authentication frame may include the information on the authentication algorithm number, the authentication transaction sequence number, the status code, the challenge text, the robust security network (RSN), and/or the finite cyclic group.

The processor 520 may discover the AP 401 and perform an authentication operation with the discovered AP 401. When the authentication between the AP 401 and the electronic device 100 is successful, the processor 520 may perform the association procedure. The association procedure may refer to the procedure in which the electronic device 100 and the AP 401 negotiate the configurations related to the short-range wireless communication.

The processor 520 may control the communication circuit 510 to transmit a first association request frame to the AP 401. The first association request frame may include the information indicating the configuration supportable by the electronic device 100.

According to one example, the first association request frame may include protocol information of the short-range wireless communication supportable by the electronic device 100. For example, when the communication circuit 510 supports all the short-range wireless communications including Wi-Fi 7, the processor 520 may transmit, to the AP 401, the first association request frame indicating that the communication circuit 510 supports Wi-Fi 7, Wi-Fi 6E, Wi-Fi 5, Wi-Fi 4, Wi-Fi 3, Wi-Fi 2, and/or Wi-Fi 1.

According to one example, the first association request frame may include information indicating a security type of the short-range wireless communication supportable by the electronic device 100. For example, when the communication circuit 510 supports an encryption scheme using any one of Wi-Fi protected access 3 (WPA 3), WPA2, WAP1, fast-time phase shift keying (FT-PSK), PSK, and/or OWE, the processor 520 may transmit, to the AP 401, the first association request frame indicating that the commuication circuit 510 supports the Wi-Fi protected access 3 (WPA 3), the WPA2, the WAP1, the fast-time phase shift keying (FT-PSK), the PSK, and/or the OWE.

According to one example, the first association request frame may include information indicating whether to activate functions of the short-range wireless communication supportable by the electronic device 100. The functions of the short-range wireless communication supportable by the electronic device 100 may refer to various functions that the electronic device 100 and the AP 401 may activate through the negotiation in the association procedure. For example, the functions of the short-range wireless communication may include at least one of the BSS transition management (BTM), the beacon report, or the neighbor report that may report information on neighboring APs. Examples of the association request frame includes the information related to various capabilities, and the information related to the beacon listening interval, the service set identifier (SSID), the supported rates, the supported channels, the RSN, the mobility domain, the supported operating classes, the traffic indication map (TIM) broadcast request, and/or the interworking service capability.

The AP 401 may receive the first association request frame transmitted by the electronic device 100, and configure (or set up) the short-range wireless communication between the electronic device 100 and the AP 401 based on the information indicating the configuration supportable by the electronic device 100, which is included in the first association request frame. However, the AP 401 may fail to associate between the electronic device 100 and the AP 401 for various reasons. According to one example, at least some of the configurations supportable by the electronic device 100 may conflict with the configuration supportable by the AP 401, and the association between the electronic device 100 and the AP 401 may fail. When the association between the electronic device 100 and the AP 401 fails, the AP 401 may transmit, to the electronic device 100, the association response frame indicating that the connection between the AP 401 and the electronic device 100 has failed.

The processor 520 may receive the association response frame indicating that the association between the AP 401 and the electronic device 100 has failed. Upon receiving the association response frame indicating that the association between the AP 401 and the electronic device 100 has failed, the processor 520 may end a connection procedure through the short-range wireless communication between the AP 401 and the electronic device 100. The processor 520 may be connected to an AP other than the AP 401 through the short-range wireless communication and perform a service using the short-range wireless communication, or the processor 520 may perform a service using the short-range wireless communication and other wireless communication (e.g., cellular wireless communication).

The processor 520 may store, in the memory 530, the information related to the AP (e.g., AP 401) that failed to connect to the electronic device 100 through the short-range wireless communication.

According to one example, the information related to the AP that has failed to connect includes at least one of the status code included in the association response frame received from the AP 401 when the connection has failed, information (e.g., Wi-Fi 7, Wi-Fi 6, Wi-Fi 5, Wi-Fi 4, Wi-Fi 3, Wi-Fi 2, and/or Wi-Fi 1) indicating a protocol of the short-range wireless communication supportable by the AP 401 and/or the electronic device 100, information (e.g., Wi-Fi protected access 3 (WPA 3), WPA2, WAP1, fast-time phase shift keying (FT-PSK), PSK, and/or OWE) indicating a security type of the short-range wireless communication supportable by the AP 401 and/or the electronic device 100, a function (e.g., BTM, beacon report, and/or neighbor report) of the short-range wireless communication supportable by the AP 401 and/or the electronic device 100, identification information (e.g., MAC address, and/or BSSID) of the AP 401 and/or the electronic device 100, a configuration used when the connection was successful if there is a history of the successful connection between the AP 401 and the electronic device 100, or the number of times the AP 401 and the electronic device 100 failed to connect.

The processor 520 may identify that the connection through the short-range wireless communication between the AP 401 and the electronic device 100 has failed (or that the association procedure or authentication procedure between the AP 401 and the electronic device 100 has failed), modify the configuration related to the short-range wireless communication supportable by the electronic device 100, and reattempt to eastablish the connection procedure to the AP 401 based on the modified configuration.

The processor 520 may modify the configuration to support other protocols except for at least one of the protocols of the short-range wireless communication supportable by the electronic device 100 (or not to support at least one protocol), and may perform the connection procedure to the AP 401 based on the modified configuration.

According to one example, the processor 520 may modify the configuration to support other protocols except for the protocol corresponding to the highest generation among the protocols of the short-range wireless communication supportable by the electronic device 100 (or, not to support the protocol corresponding to the highest generation), and may perform the connection procedure to the AP 401 based on the modified configuration. For example, when the electronic device 100 supports all of Wi-Fi 1, Wi-Fi 2, Wi-Fi 3, Wi-Fi 4, Wi-Fi 5, Wi-Fi 6, Wi-Fi 6E, and Wi-Fi 7, the processor 520 may modify the configuration to support other protocols except for Wi-Fi 7, which is the highest generation, and may perform the connection procedure to the AP 401 based on the modified configuration. Considering the possibility that compatibility issues (or problems) may occur between the AP 401 and the electronic device 100 as the highest generation (or the latest) protocol is used, the processor 520 may modify the configuration to support other protocols except for the protocol corresponding to the highest generation among the protocols of the short-range wireless communication supportable by the electronic device 100 (or not to support the protocol corresponding to the highest generation), and may perform the connection procedure to the AP 401 based on the modified configuration.

The processor 520 may perform the association procedure between the AP 401 and the electronic device 100 based on the modified configuration, and identify that the association procedure between the AP 401 and the electronic device 100 has failed again. The processor 520 may identify that the association procedure between the AP 401 and the electronic device 100 has failed again as the association response frame indicating that the association procedure has failed is received from the AP 401.

When the association procedure between the AP 401 and the electronic device 100 fails again, the processor 520 may modify the configuration to support other protocols except for the protocol corresponding to the highest generation and the protocol corresponding to the second highest generation among the protocols of the short-range wireless communication supportable by the electronic device 100, and may perform the connection procedure to the AP 401 based on the modified configuration. For example, when the electronic device 100 supports all of the Wi-Fi 1, Wi-Fi 2, Wi-Fi 3, Wi-Fi 4, Wi-Fi 5, Wi-Fi 6, Wi-Fi 6E, and Wi-Fi 7, the processor 520 may modify the configuration to support other protocols except for the highest generation, Wi-Fi 7, and the second highest generation, Wi-Fi 6E, and may perform the connection procedure to the AP 401 based on the modified configuration.

When the connection procedure between the AP 401 and the electronic device 100 fails again, the processor 520 may sequentially modify the configuration so as not to support the protocol corresponding to the next higher generation, and may perform the connection procedure to the AP 401 based on the modified configuration.

The processor 520 may modify the configuration to support (or not to support at least one security type) other security types except for at least one of the security types of the short-range wireless communication supportable by the electronic device 100, and may perform the connection procedure to the AP 401 based on the modified configuration.

According to one example, the processor 520 may modify the configuration to support (or not to support the security type corresponding to the highest generation) other security types except for the security type with the highest security among the security types of the short-range wireless communication supportable by the electronic device 100, and may perform the connection procedure to the AP 401 based on the modified configuration. For example, when the electronic device 100 supports all of the Wi-Fi protected access 3 (WPA 3), WPA2, WAP1, fast-time phase shift keying (FT-PSK), PSK, and OWE, the processor 520 may modify the configuration to support other security types except for the security type with the highest security (e.g., WPA3), and may perform the connection procedure to the AP 401 based on the modified configuration. Considering the possibility that the compatibility issues (or problems) may occur between the AP 401 and the electronic device 100 as the security type with higher security is used, the processor 520 may modify the configuration to support (or not to support the security type with the highest security) other security types except for the security type with the highest security among the security types of the short-range wireless communication supportable by the electronic device 100, and may perform the connection procedure to the AP 401 based on the modified configuration.

The processor 520 may perform the association procedure between the AP 401 and the electronic device 100 based on the modified configuration, and identify that the association procedure between the AP 401 and the electronic device 100 has failed again. The processor 520 may identify that the association procedure between the AP 401 and the electronic device 100 has failed again as the association response frame indicating that the association procedure has failed is received from the AP 401.

When the association procedure between the AP 401 and the electronic device 100 fails again, the processor 520 may modify the configuration to support other security types except for the security type with the highest security and the security type with the second highest security among the security types of the short-range wireless communication supportable by the electronic device 100, and may perform the connection procedure to the AP 401 based on the modified configuration. For example, when the electronic device 100 supports all of the Wi-Fi protected access 3 (WPA 3), WPA2, WAP1, fast-time phase shift keying (FT-PSK), PSK, and OWE, the processor 520 may modify the configuration to support other security types except for the security type WPA3 with the highest security and the security type WPA 2 with the second highest security, and may perform the connection procedure to the AP 401 based on the modified configuration.

When the connection procedure between the AP 401 and the electronic device 100 fails again, the processor 520 may sequentially modify the configuration so as not to support the security type corresponding to the next higher generation, and may perform the connection procedure to the AP 401 based on the modified configuration.

The processor 520 may modify the configuration so as to modify whether at least some of the functions of the short-range wireless communication supportable by the electronic device 100 are activated, and may perform the connection procedure to the AP 401 based on the modified configuration.

The functions of the short-range wireless communication supportable by the electronic device 100 may refer to various functions that the electronic device 100 and the AP 401 may activate through the negotiation in the association procedure.

According to one example, the processor 520 may modify the configuration so as to modify whether at least some of the functions of the short-range wireless communication supportable by the electronic device 100 are activated, and may perform the connection procedure to the AP 401 based on the modified configuration. For example, when the electronic device 100 supports all of the BTM, beacon report, and neighbor report, the processor 520 may modify whether at least some (e.g., BTM) of the functions are activated (e.g., modification to deactivation), and perform the connection procedure to the AP 401 based on the modified configuration. The processor 520 may store information related to other APs as well as the AP 401 in the memory 530, and identify and/or store the main reasons when the connection fails between other APs and the electronic device 100. The processor 520 may configure the priority of the function whose activation is to be modified by considering the main reasons (e.g., activation of a specific function), and determine (or configure) the order of the functions whose activation is to be modified based on the priority.

The processor 520 may attempt to establish the connection to the AP 401 using a scheme that modifies the protocol of the short-range wireless communication, the security type of the short-range wireless communication, and/or whether the function of the short-range wireless communication is activated. The processor 520 may attempt to establish the connection to the AP 401 by controlling the communication circuit 510 to transmit the second association request frame including the information indicating the modified configuration to the AP 401.

The processor 520 may transmit the second association request frame including the information indicating the modified configuration to the AP 401 based on whether the electronic device 100 satisfies a specified condition.

According to an example, the specified condition may refer to a condition under which the electronic device 100 is determined not to use the short-range wireless communication. For example, the specified condition may include a condition under which the electronic device 100 does not transmit and/or receive packets (or data) for a designated time or longer. The specified condition may include a condition under which the display of the electronic device 100 is deactivated. The specified condition may include a condition under which the electronic device 100 is not performing services (e.g., Wi-Fi aware, Wi-Fi direct) related to the short-range wireless communication. The specified condition may include a condition under which the user of the electronic device 100 is in a sleeping state.

The processor 520 may transmit the second association request frame including the information indicating the modified configuration to the AP 401 based on that the electronic device 100 satisfies the specified condition.

When the connection attempt between the AP 401 and the electronic device 100 has continuously failed, the processor 520 may attempt to establish the connection to the AP 401 using the scheme that modifies the protocol of the short-range wireless communication, the security type of the short-range wireless communication, and/or whether the function of the short-range wireless communication is activated.

According to one example, when the connection between the AP 401 and the electronic device 100 has continuously failed for a designated period, the processor 520 may attempt to establish the connection to the AP 401 using the scheme that modifies the protocol of the short-range wireless communication, the security type of the short-range wireless communication, and/or whether the function of the short-range wireless communication is activated. The designated period may be modified according to the history of the successful connection between the AP 401 and the electronic device 100. For example, the designated period corresponding to a case where there is the history of the successful connection between the AP 401 and the electronic device 100 may be configured to be longer than the designated period corresponding to a case where there is no history of successful connection between the AP 401 and the electronic device 100.

The processor 520 controls the communication circuit 510 to transmit the second association request frame including the information indicating the modified configuration to the AP 401, and after transmitting the second association request frame, may receive, from the AP 401, the association response frame including the information indicating that the association between the electronic device 100 and the AP 401 is successful. When the association between the electronic device 100 and the AP 401 is successful, the processor 520 may store the used modified configuration in the memory 530. The processor 520 may be connected to the AP 401 through the short-range wireless communication using the modified configuration for the designated time. After the designated time has expired, the processor 520 may reattempt to establish the connection to the AP 401 using a scheme that transmits, to the AP 401, the association request frame including the configuration related to the short-range wireless communication supported by the electronic device 100, not the modified configuration. The configuration supportable by the electronic device 100, which is included in the association request frame, may be the same as the configuration supportable by the electronic device 100, which is included in the first association request frame. When the processor 520 is successfully connected to the AP 401, the processor 520 may be connected to the AP 401 through the short-range wireless communication based on the configuration included in the first association request frame, not the modified configuration. When the processor 520 fails in connecting to the AP 401, the processor 520 may be connected to the AP 401 through the short-range wireless communication based on the modified configuration.

When the status code included in the association response frame received from the AP 401 is not the designated status code, the processor 520 may attempt to establish the connection to the AP 401 using the scheme that modifies the protocol of the short-range wireless communication, the security type of the short-range wireless communication, and/or whether the function of the short-range wireless communication is activated, and transmits the second association request frame including the information indicating the modified configuration to the AP 401.

The designated status code may include a status code (status code 31) indicating that the connection through the short-range wireless communication between the AP 401 and the electronic device 100 may not be performed non-temporarily. When the processor 520 receives the association response frame including the status code indicating that the connection through the short-range wireless communication between the AP 401 and the electronic device 100 may not be performed non-temporarily, the processor 520 may attempt to establish the connection to the AP 401 based on the unmodified configuration (or the configuration included in the first association request frame) after the designated time.

The designated status code may include a status code (e.g., status code 53) indicating that the pairwise master key identifier (PMKID) included in the first association request frame is invalid. When the processor 520 receives the association response frame including the status code indicating that the pairwise master key identifier (PMKID) included in the first association request frame is invalid, the processor 520 may attempt to establish the connection to the AP 401 based on the modified PMKID.

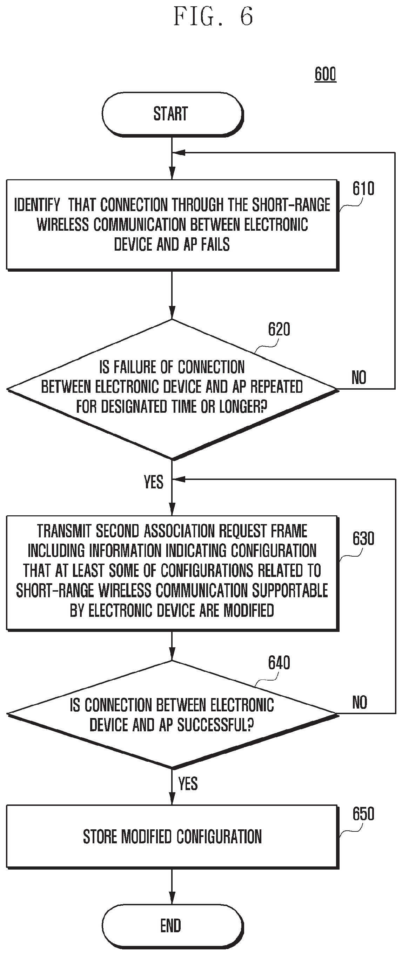

FIG. 6 is a diagram illustrating an example 600 in which the electronic device according to an embodiment transmits the second association request frame including the information indicating the configuration in which at least some of the configurations related to the short-range wireless communication supportable by the electronic device are modified.

In operation 610, the electronic device (e.g., the electronic device 100 of FIG. 5) may identify that the connection through the short-range wireless communication between the electronic device 100 and the AP (e.g., the AP 401 of FIG. 4A) has failed.

The electronic device 100 may discover the AP 401 in order to perform the short-range wireless communication provided by the AP 401. The electronic device 100 may control the communication circuit 510 to broadcast the probe request message in order to search for an AP.

The probe request message may include the information on the electronic device 100. According to one example, the probe request message may include various types of identification information (e.g., MAC address) that may distinguish the electronic device 100 from other electronic devices, and/or the performance information related to the short-range wireless communication of the electronic device 100. When receiving the probe request message, the AP 401 may transmit the probe response message corresponding to the probe request message to the electronic device 100. The electronic device 100 may be successful in searching for the AP 401 when receiving the probe response message.

The electronic device 100 may perform the authentication procedure with the discovered AP 401. The electronic device 100 may control the communication circuit 510 to transmit the authentication request frame to the AP 401.

According to an embodiment, the authentication frame may include the information on the authentication algorithm number, the authentication transaction sequence number, the status code, the challenge text, the robust security network (RSN), and/or the finite cyclic group.

The electronic device 100 may discover the AP 401 and perform an authentication operation with the discovered AP 401. When the authentication between the AP 401 and the electronic device 100 is successful, the electronic device 100 may perform the association procedure. The association procedure may refer to the procedure in which the electronic device 100 and the AP 401 negotiate the configurations related to the short-range wireless communication.

The electronic device 100 may control the communication circuit 510 to transmit a first association request frame to the AP 401. The first association request frame may include the information indicating the configuration supportable by the electronic device 100.

According to one example, the first association request frame may include protocol information of the short-range wireless communication supportable by the electronic device 100. For example, when the communication circuit 510 supports all the short-range wireless communications including Wi-Fi 7, the electronic device 100 may transmit, to the AP 401, the first association request frame indicating that the commuication circuit 510 supports Wi-Fi 7, Wi-Fi 6E, Wi-Fi 5, Wi-Fi 4, Wi-Fi 3, Wi-Fi 2, and/or Wi-Fi 1.

According to one example, the first association request frame may include information indicating a security type of the short-range wireless communication supportable by the electronic device 100. For example, when the communication circuit 510 supports an encryption scheme using any one of Wi-Fi protected access 3 (WPA 3), WPA2, WAP1, fast-time phase shift keying (FT-PSK), PSK, and/or OWE, the electronic device 100 may transmit, to the AP 401, the first association request frame indicating that the communication circuit 510 supports the Wi-Fi protected access 3 (WPA 3), the WPA2, the WAP1, the fast-time phase shift keying (FT-PSK), the PSK, and/or the OWE.

According to one example, the first association request frame may include information indicating whether to activate functions of the short-range wireless communication supportable by the electronic device 100. The functions of the short-range wireless communication supportable by the electronic device 100 may refer to various functions that the electronic device 100 and the AP 401 may activate through the negotiation in the association procedure. For example, the functions of the short-range wireless communication may include at least one of the BSS transition management (BTM), the beacon report, or the neighbor report that may report information on neighboring APs. Examples of the association request frame includes the information related to various capabilities, and the information related to the beacon listening interval, the service set identifier (SSID), the supported rates, the supported channels, the RSN, the mobility domain, the supported operating classes, the traffic indication map (TIM) broadcast request, and/or the interworking service capability.

The AP 401 may receive the first association request frame transmitted by the electronic device 100, and configure (or set up) the short-range wireless communication between the electronic device 100 and the AP 401 based on the information indicating the configuration supportable by the electronic device 100, which is included in the first association request frame. However, the AP 401 may fail to associate between the electronic device 100 and the AP 401 for various reasons. According to one example, at least some of the configurations supportable by the electronic device 100 may conflict with the configuration supportable by the AP 401, and the association between the electronic device 100 and the AP 401 may fail. When the association between the electronic device 100 and the AP 401 fails, the AP 401 may transmit, to the electronic device 100, the association response frame indicating that the connection between the AP 401 and the electronic device 100 has failed.

The electronic device 100 may receive the association response frame indicating that the association between the AP 401 and the electronic device 100 has failed. Upon receiving the association response frame indicating that the association between the AP 401 and the electronic device 100 has failed, the electronic device 100 may end the connection procedure through the short-range wireless communication between the AP 401 and the electronic device 100.

In operation 620, the electronic device 100 may identify whether the failure of the connection between the electronic device 100 and the AP 401 is repeated for the designated time or longer.

When the connection attempt between the AP 401 and the electronic device 100 has continuously failed, the electronic device 100 may attempt to establish the connection to the AP 401 using the scheme that modifies the protocol of the short-range wireless communication, the security type of the short-range wireless communication, and/or whether the function of the short-range wireless communication is activated.

According to one example, when a designated time has not expired since the time point when the connection between the AP 401 and the electronic device 100 has failed, the electronic device 100 may attempt to establish the connection between the electronic device 100 and the AP 401 using the scheme that transmits, to the AP 401, the association request frame including the same configuration as the configuration supportable by the electronic device 100, which is included in the first association request frame.

According to one example, when the connection between the AP 401 and the electronic device 100 has continuously failed for the designated period, the electronic device 100 may attempt to establish the connection to the AP 401 using the scheme that modifies the protocol of the short-range wireless communication, the security type of the short-range wireless communication, and/or whether the function of the short-range wireless communication is activated. The designated period may be modified according to the history of the successful connection between the AP 401 and the electronic device 100. For example, the designated period corresponding to the case where there is the history of the successful connection between the AP 401 and the electronic device 100 may be configured to be longer than the designated period corresponding to the case where there is no history of successful connection between the AP 401 and the electronic device 100.

In operation 630, when the connection failure between the electronic device 100 and the AP 401 is repeated for the designated time or longer (operation 620-Y), the electronic device 100 may transmit, to the AP 401, the second association request frame including the information indicating the configuration in which at least some of the configurations related to the short-range wireless communication supportable by the electronic device 100 are modified.

The electronic device 100 may identify that the connection through the short-range wireless communication between the AP 401 and the electronic device 100 has failed (or that the association procedure or the authentication procedure between the AP 401 and the electronic device 100 has failed), modify the configuration related to the short-range wireless communication supportable by the electronic device 100, and reattempt to establish the connection procedure to the AP 401 based on the modified configuration.

The processor 520 may modify the configuration to support other protocols except for at least one of the protocols of the short-range wireless communication supportable by the electronic device 100 (or not to support at least one protocol), and may perform the connection procedure to the AP 401 based on the modified configuration.

According to one example, the electronic device 100 may modify the configuration to support other protocols except for the protocol corresponding to the highest generation among the protocols of the short-range wireless communication supportable by the electronic device 100 (or not to support the protocol corresponding to the highest generation), and may perform the connection procedure to the AP 401 based on the modified configuration. For example, when the electronic device 100 supports all of the Wi-Fi 1, Wi-Fi 2, Wi-Fi 3, Wi-Fi 4, Wi-Fi 5, Wi-Fi 6, Wi-Fi 6E, and Wi-Fi 7, the electronic device 100 may modify the configuration to support other protocols except for Wi-Fi 7, which is the highest generation, and may perform the connection procedure to the AP 401 based on the modified configuration. Considering the possibility that compatibility issues (or problems) may occur between the AP 401 and the electronic device 100 as the highest generation (or the latest) protocol is used, the electronic device 100 may modify the configuration to support other protocols except for the protocol corresponding to the highest generation among the protocols of the short-range wireless communication supportable by the electronic device 100 (or not to support the protocol corresponding to the highest generation), and may perform the connection procedure to the AP 401 based on the modified configuration.

The processor 520 may modify the configuration to support (or not to support at least one security type) other security types except for at least one of the security types of the short-range wireless communication supportable by the electronic device 100, and may perform the connection procedure to the AP 401 based on the modified configuration.

According to one example, the electronic device 100 may modify the configuration to support (or not to support the security type corresponding to the highest generation) other security types except for the security type with the highest security among the security types of the short-range wireless communication supportable by the electronic device 100, and may perform the connection procedure to the AP 401 based on the modified configuration. For example, when the electronic device 100 supports all of the Wi-Fi protected access 3 (WPA 3), WPA2, WAP1, fast-time phase shift keying (FT-PSK), PSK, and OWE, the electronic device 100 may modify the configuration to support other security types except for the security type with the highest security (e.g., WPA3), and may perform the connection procedure to the AP 401 based on the modified configuration. Considering the possibility that the compatibility issues (or problems) may occur between the AP 401 and the electronic device 100 as the security type with higher security is used, the electronic device 100 may modify the configuration to support (or not to support the security type with the highest security) other security types except for the security type with the highest security among the security types of the short-range wireless communication supportable by the electronic device 100, and may perform the connection procedure to the AP 401 based on the modified configuration.

The processor 520 may modify the configuration so as to modify whether at least some of the functions of the short-range wireless communication supportable by the electronic device 100 are activated, and may perform the connection procedure to the AP 401 based on the modified configuration.

The functions of the short-range wireless communication supportable by the electronic device 100 may refer to various functions that the electronic device 100 and the AP 401 may activate through the negotiation in the association procedure.

According to one example, the electronic device 100 may modify the configuration so as to modify whether at least some of the functions of the short-range wireless communication supportable by the electronic device 100 are activated, and may perform the connection procedure to the AP 401 based on the modified configuration. For example, when the electronic device 100 supports all of the BTM, beacon report, and neighbor report, the electronic device 100 may modify whether at least some (e.g., BTM) of the functions are activated (e.g., modification to deactivation), and perform the connection procedure to the AP 401 based on the modified configuration. The electronic device 100 may store the information related to other APs as well as the AP 401 in the memory 530, and identify and/or store the main reasons when the connection fails between other APs and the electronic device 100. The electronic device 100 may configure the priority of the function whose activation is to be modified by considering the main reasons (e.g., activation of a specific function), and determine (or configure) the order of the functions whose activation is to be modified based on the priority.

The electronic device 100 may attempt to establish the connection to the AP 401 using the scheme that modifies the protocol of the short-range wireless communication, the security type of the short-range wireless communication, and/or whether the function of the short-range wireless communication is activated. The electronic device 100 may attempt to establish the connection to the AP 401 by controlling the communication circuit 510 to transmit the second association request frame including the information indicating the modified configuration to the AP 401.

In operation 640, the electronic device 100 may identify whether the connection between the electronic device 100 and the AP 401 is successful.

When the connection between the electronic device 100 and the AP 401 has failed (operation 640-N), the electronic device 100 may transmit a third association request frame to the AP 401 including the information indicating the configuration in which some other of the configurations related to the short-range wireless communication supportable by the electronic device 100 are modified.

The electronic device 100 may perform the association procedure between the AP 401 and the electronic device 100 based on the modified configuration, and may identify that the association procedure between the AP 401 and the electronic device 100 has failed again. The electronic device 100 may identify that the association procedure between the AP 401 and the electronic device 100 has failed again by receiving, from the AP 401, the association response frame indicating that the association procedure has failed.

When the association procedure between the AP 401 and the electronic device 100 fails again, the electronic device 100 may modify the configuration to support other protocols except for the protocol corresponding to the highest generation and the protocol corresponding to the second highest generation among the protocols of the short-range wireless communication supportable by the electronic device 100, and may perform the connection procedure to the AP 401 based on the modified configuration. For example, when the electronic device 100 supports all of the Wi-Fi 1, Wi-Fi 2, Wi-Fi 3, Wi-Fi 4, Wi-Fi 5, Wi-Fi 6, Wi-Fi 6E, and Wi-Fi 7, the electronic device 100 may modify the configuration to support other protocols except for the highest generation, Wi-Fi 7, and the second highest generation, Wi-Fi 6E, and may perform the connection procedure to the AP 401 based on the modified configuration.

When the connection procedure between the AP 401 and the electronic device 100 fails again, the electronic device 100 may sequentially modify the configuration so as not to support the protocol corresponding to the next higher generation, and may perform the connection procedure to the AP 401 based on the modified configuration.

The electronic device 100 may perform the association procedure between the AP 401 and the electronic device 100 based on the modified configuration, and may identify that the association procedure between the AP 401 and the electronic device 100 has failed again. The electronic device 100 may identify that the association procedure between the AP 401 and the electronic device 100 has failed again by receiving, from the AP 401, the association response frame indicating that the association procedure has failed.

When the association procedure between the AP 401 and the electronic device 100 fails again, the electronic device 100 may modify the configuration to support other security types except for the security type with the highest security and the security type with the second highest security among the security types of the short-range wireless communication supportable by the electronic device 100, and may perform the connection procedure to the AP 401 based on the modified configuration. For example, when the electronic device 100 supports all of the Wi-Fi protected access 3 (WPA 3), WPA2, WAP1, fast-time phase shift keying (FT-PSK), PSK, and OWE, the electronic device 100 may modify the configuration to support other security types except for the security type WPA3 with the highest security and the security type WPA 2 with the second highest security, and may perform the connection procedure to the AP 401 based on the modified configuration.

When the connection procedure between the AP 401 and the electronic device 100 fails again, the electronic device 100 may sequentially modify the configuration so as not to support the security type having the next higher security, and may perform the connection procedure to the AP 401 based on the modified configuration.

When the connection between the electronic device 100 and the AP 401 is successful (operation 640-Y), the electronic device 100 may store the modified configuration in the memory (e.g., the memory 530 of FIG. 5) in operation 650.

The electronic device 100 may perform the connection between the AP 401 and the electronic device 100 based on the modified configuration.

The electronic device 100 controls the communication circuit 510 to transmit the second association request frame including the information indicating the modified configuration to the AP 401, and after transmitting the second association request frame, may receive, from the AP 401, the association response frame including the information indicating that the association between the electronic device 100 and the AP 401 is successful. When the association between the electronic device 100 and the AP 401 is successful, the electronic device 100 may store the used modified configuration in the memory 530. The electronic device 100 may be connected to the AP 401 through the short-range wireless communication using the modified configuration for the designated time. After the designated time has expired, the electronic device 100 may reattempt to establish the connection to the AP 401 using the scheme that transmits, to the AP 401, the association request frame including the configuration related to the short-range wireless communication supported by the electronic device 100, not the modified configuration. When the electronic device 100 is successfully connected to the AP 401, the electronic device 100 may be connected to the AP 401 through the short-range wireless communication based on the configuration included in the first association request frame, not the modified configuration. When the electronic device 100 fails in connecting to the AP 401, the electronic device 100 may be connected to the AP 401 through the short-range wireless communication based on the modified configuration.

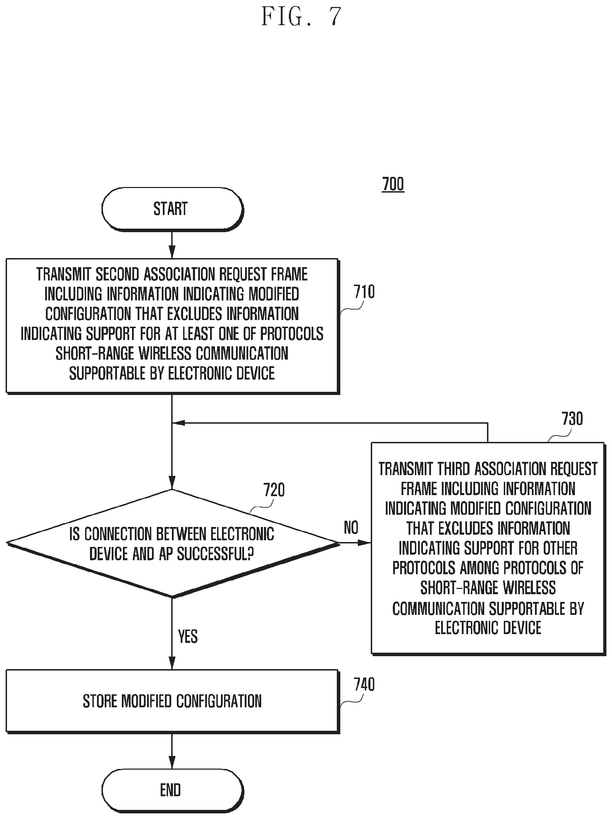

FIG. 7 is a diagram illustrating an example 700 in which the electronic device according to an embodiment transmits the second association request frame including the information indicating the configuration that excludes information indicating support for at least one of the protocols of the short-range wireless communication supportable by the electronic device.

In operation 710, the electronic device (e.g., the electronic device 100 of FIG. 5) may transmit, to the AP (e.g., the AP 401 of FIG. 4A), the second association request frame including the information indicating the modified configuration that excludes information indicating support for at least one of the protocols of the short-range wireless communication supportable by the electronic device 100.

The electronic device 100 may discover the AP 401 and perform an authentication operation with the discovered AP 401. When the authentication between the AP 401 and the electronic device 100 is successful, the electronic device 100 may perform the association procedure. The association procedure may refer to the procedure in which the electronic device 100 and the AP 401 negotiate the configurations related to the short-range wireless communication.

The electronic device 100 may control the communication circuit 510 to transmit the first association request frame to the AP 401. The first association request frame may include the information indicating the configuration supportable by the electronic device 100.

The AP 401 may receive the first association request frame transmitted by the electronic device 100, and configure (or set up) the short-range wireless communication between the electronic device 100 and the AP 401 based on the information indicating the configuration supportable by the electronic device 100, which is included in the first association request frame. However, the AP 401 may fail to associate between the electronic device 100 and the AP 401 for various reasons. According to one example, at least some of the configurations supportable by the electronic device 100 may conflict with the configuration supportable by the AP 401, and the association between the electronic device 100 and the AP 401 may fail. When the association between the electronic device 100 and the AP 401 fails, the AP 401 may transmit, to the electronic device 100, the association response frame indicating that the connection between the AP 401 and the electronic device 100 has failed.

The electronic device 100 may receive the association response frame indicating that the association between the AP 401 and the electronic device 100 has failed. Upon receiving the association response frame indicating that the association between the AP 401 and the electronic device 100 has failed, the electronic device 100 may end the connection procedure through the short-range wireless communication between the AP 401 and the electronic device 100.

The electronic device 100 may identify that the connection through the short-range wireless communication between the AP 401 and the electronic device 100 has failed (or that the association procedure or the authentication procedure between the AP 401 and the electronic device 100 has failed), modify the configuration related to the short-range wireless communication supportable by the electronic device 100, and reattempt to establish the connection procedure to the AP 401 based on the modified configuration.

The electronic device 100 may modify the configuration to support other protocols except for at least one of the protocols of the short-range wireless communication supportable by the electronic device 100 (or not to support at least one protocol), and may perform the connection procedure to the AP 401 based on the modified configuration.

According to one example, the electronic device 100 may modify the configuration to support other protocols except for the protocol corresponding to the highest generation among the protocols of the short-range wireless communication supportable by the electronic device 100 (or not to support the protocol corresponding to the highest generation), and may perform the connection procedure to the AP 401 based on the modified configuration. For example, when the electronic device 100 supports all of the Wi-Fi 1, Wi-Fi 2, Wi-Fi 3, Wi-Fi 4, Wi-Fi 5, Wi-Fi 6, Wi-Fi 6E, and Wi-Fi 7, the electronic device 100 may modify the configuration to support other protocols except for Wi-Fi 7, which is the highest generation, and may perform the connection procedure to the AP 401 based on the modified configuration. Considering the possibility that compatibility issues (or problems) may occur between the AP 401 and the electronic device 100 as the highest generation (or the latest) protocol is used, the electronic device 100 may modify the configuration to support other protocols except for the protocol corresponding to the highest generation among the protocols of the short-range wireless communication supportable by the electronic device 100 (or not to support the protocol corresponding to the highest generation), and may perform the connection procedure to the AP 401 based on the modified configuration.

In operation 720, the electronic device 100 may identify whether the connection between the electronic device 100 and the AP 401 is successful.

The electronic device 100 may attempt the connection through the short-range wireless communication between the AP 401 and the electronic device 100 based on the modified configuration included in the second association request frame.

In operation 730, the electronic device 100 may transmit, to the AP 401, the third association request frame including the information indicating the modified configuration that excludes information indicating support for other protocols among the protocols of the short-range wireless communication supportable by the electronic device 100, based on that the connection between the electronic device 100 and the AP 401 has failed (operation 720-N).

The electronic device 100 may perform the association procedure between the AP 401 and the electronic device 100 based on the modified configuration, and may identify that the association procedure between the AP 401 and the electronic device 100 has failed again. The electronic device 100 may identify that the association procedure between the AP 401 and the electronic device 100 has failed again by receiving, from the AP 401, the association response frame indicating that the association procedure has failed.

When the association procedure between the AP 401 and the electronic device 100 fails again, the electronic device 100 may modify the configuration to support other protocols except for the protocol corresponding to the highest generation and the protocol corresponding to the second highest generation among the protocols of the short-range wireless communication supportable by the electronic device 100, and may perform the connection procedure to the AP 401 based on the modified configuration. For example, when the electronic device 100 supports all of the Wi-Fi 1, Wi-Fi 2, Wi-Fi 3, Wi-Fi 4, Wi-Fi 5, Wi-Fi 6, Wi-Fi 6E, and Wi-Fi 7, the electronic device 100 may modify the configuration to support other protocols except for the highest generation, Wi-Fi 7, and the second highest generation, Wi-Fi 6E, and may perform the connection procedure to the AP 401 based on the modified configuration.

When the connection procedure between the AP 401 and the electronic device 100 fails again, the electronic device 100 may sequentially modify the configuration so as not to support the protocol corresponding to the next higher generation, and may perform the connection procedure to the AP 401 based on the modified configuration.

In operation 740, when the connection between the electronic device 100 and the AP 401 is successful (operation 720-Y), the electronic device 100 may store the modified configuration in the memory 530.

The electronic device 100 controls the communication circuit 510 to transmit the second association request frame including the information indicating the modified configuration to the AP 401, and after transmitting the second association request frame, may receive, from the AP 401, the association response frame including the information indicating that the association between the electronic device 100 and the AP 401 is successful. When the association between the electronic device 100 and the AP 401 is successful, the electronic device 100 may store the used modified configuration in the memory 530. The electronic device 100 may be connected to the AP 401 through the short-range wireless communication using the modified configuration for the designated time. After the designated time has expired, the electronic device 100 may reattempt to establish the connection to the AP 401 using the scheme that transmits, to the AP 401, the association request frame including the configuration related to the short-range wireless communication supported by the electronic device 100, not the modified configuration. When the electronic device 100 is successfully connected to the AP 401, the electronic device 100 may be connected to the AP 401 through the short-range wireless communication based on the configuration included in the first association request frame, not the modified configuration. When the electronic device 100 fails in connecting to the AP 401, the electronic device 100 may be connected to the AP 401 through the short-range wireless communication based on the modified configuration.

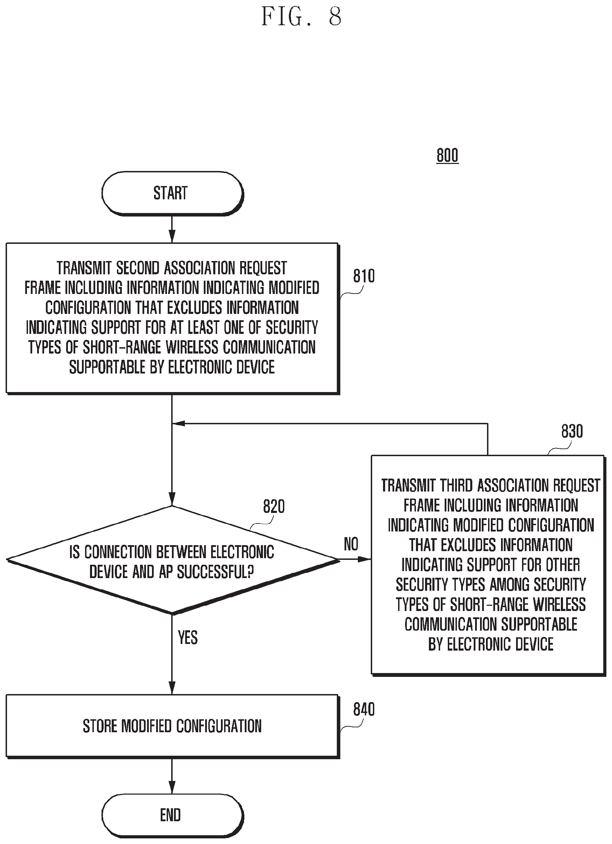

FIG. 8 is a diagram illustrating an example 800 in which the electronic device according to an embodiment transmits the second association request frame including the information indicating the configuration that excludes information indicating support for at least one of security types of the short-range wireless communication supportable by the electronic device.

In operation 810, the electronic device (e.g., the electronic device 100 of FIG. 5) may transmit, to the AP (e.g., the AP 401 of FIG. 4A), the second association request frame including the information indicating the modified configuration that excludes information indicating support for at least one of the security types of the short-range wireless communication supportable by the electronic device 100.

The electronic device 100 may discover the AP 401 and perform the authentication operation with the discovered AP 401. When the authentication between the AP 401 and the electronic device 100 is successful, the electronic device 100 may perform the association procedure. The association procedure may refer to the procedure in which the electronic device 100 and the AP 401 negotiate the configurations related to the short-range wireless communication.

The electronic device 100 may control the communication circuit 510 to transmit the first association request frame to the AP 401. The first association request frame may include the information indicating the configuration supportable by the electronic device 100.

The AP 401 may receive the first association request frame transmitted by the electronic device 100, and configure (or set up) the short-range wireless communication between the electronic device 100 and the AP 401 based on the information indicating the configuration supportable by the electronic device 100, which is included in the first association request frame. However, the AP 401 may fail to associate between the electronic device 100 and the AP 401 for various reasons. According to one example, at least some of the configurations supportable by the electronic device 100 may conflict with the configuration supportable by the AP 401, and the association between the electronic device 100 and the AP 401 may fail. When the association between the electronic device 100 and the AP 401 fails, the AP 401 may transmit, to the electronic device 100, the association response frame indicating that the connection between the AP 401 and the electronic device 100 has failed.

The electronic device 100 may receive the association response frame indicating that the association between the AP 401 and the electronic device 100 has failed. Upon receiving the association response frame indicating that the association between the AP 401 and the electronic device 100 has failed, the electronic device 100 may end the connection procedure through the short-range wireless communication between the AP 401 and the electronic device 100.

The electronic device 100 may identify that the connection through the short-range wireless communication between the AP 401 and the electronic device 100 has failed (or that the association procedure or the authentication procedure between the AP 401 and the electronic device 100 has failed), modify the configuration related to the short-range wireless communication supportable by the electronic device 100, and reattempt to establish the connection procedure to the AP 401 based on the modified configuration.

The electronic device 100 may modify the configuration to support (or not to support at least one security type) other security types except for at least one of the security types of the short-range wireless communication supportable by the electronic device 100, and may perform the connection procedure to the AP 401 based on the modified configuration.

According to one example, the electronic device 100 may modify the configuration to support (or not to support the security type corresponding to the highest generation) other security types except for the security type with the highest security among the security types of the short-range wireless communication supportable by the electronic device 100, and may perform the connection procedure to the AP 401 based on the modified configuration. For example, when the electronic device 100 supports all of the Wi-Fi protected access 3 (WPA 3), WPA2, WAP1, fast-time phase shift keying (FT-PSK), PSK, and OWE, the electronic device 100 may modify the configuration to support other security types except for the security type with the highest security (e.g., WPA3), and may perform the connection procedure to the AP 401 based on the modified configuration. Considering the possibility that the compatibility issues (or problems) may occur between the AP 401 and the electronic device 100 as the security type with higher security is used, the electronic device 100 may modify the configuration to support (or not to support the security type with the highest security) other security types except for the security type with the highest security among the security types of the short-range wireless communication supportable by the electronic device 100, and may perform the connection procedure to the AP 401 based on the modified configuration.

In operation 820, the electronic device 100 may identify whether the connection between the electronic device 100 and the AP 401 is successful.

The electronic device 100 may attempt the connection through the short-range wireless communication between the AP 401 and the electronic device 100 based on the modified configuration included in the second association request frame.

In operation 830, the electronic device 100 may transmit, to the AP 401, the third association request frame including the information indicating the modified configuration that excludes information indicating that the electronic device 100 supports other security types among the security types of the short-range wireless communication supportable by the electronic device 100, based on that the connection between the electronic device 100 and the AP 401 has failed (operation 820-N).

The electronic device 100 may perform the association procedure between the AP 401 and the electronic device 100 based on the modified configuration, and may identify that the association procedure between the AP 401 and the electronic device 100 has failed again. The electronic device 100 may identify that the association procedure between the AP 401 and the electronic device 100 has failed again by receiving, from the AP 401, the association response frame indicating that the association procedure has failed.

When the association procedure between the AP 401 and the electronic device 100 fails again, the electronic device 100 may modify the configuration to support other security types except for the security type with the highest security and the security type with the second highest security among the security types of the short-range wireless communication supportable by the electronic device 100, and may perform the connection procedure to the AP 401 based on the modified configuration. For example, when the electronic device 100 supports all of the Wi-Fi protected access 3 (WPA 3), WPA2, WAP1, fast-time phase shift keying (FT-PSK), PSK, and OWE, the electronic device 100 may modify the configuration to support other security types except for the security type WPA3 with the highest security and the security type WPA 2 with the second highest security, and may perform the connection procedure to the AP 401 based on the modified configuration.

When the connection procedure between the AP 401 and the electronic device 100 fails again, the electronic device 100 may sequentially modify the configuration so as not to support the security type having the next higher security, and may perform the connection procedure to the AP 401 based on the modified configuration.

In operation 840, when the connection between the electronic device 100 and the AP 401 is successful (operation 820-Y), the electronic device 100 may store the modified configuration in the memory 530.

The electronic device 100 controls the communication circuit 510 to transmit the second association request frame including the information indicating the modified configuration to the AP 401, and after transmitting the second association request frame, may receive, from the AP 401, the association response frame including the information indicating that the association between the electronic device 100 and the AP 401 is successful. When the association between the electronic device 100 and the AP 401 is successful, the electronic device 100 may store the used modified configuration in the memory 530. The electronic device 100 may be connected to the AP 401 through the short-range wireless communication using the modified configuration for the designated time. After the designated time has expired, the electronic device 100 may reattempt to establish the connection to the AP 401 using the scheme that transmits, to the AP 401, the association request frame including the configuration related to the short-range wireless communication supported by the electronic device 100, not the modified configuration. When the electronic device 100 is successfully connected to the AP 401, the electronic device 100 may be connected to the AP 401 through the short-range wireless communication based on the configuration included in the first association request frame, not the modified configuration. When the electronic device 100 fails in connecting to the AP 401, the electronic device 100 may be connected to the AP 401 through the short-range wireless communication based on the modified configuration.

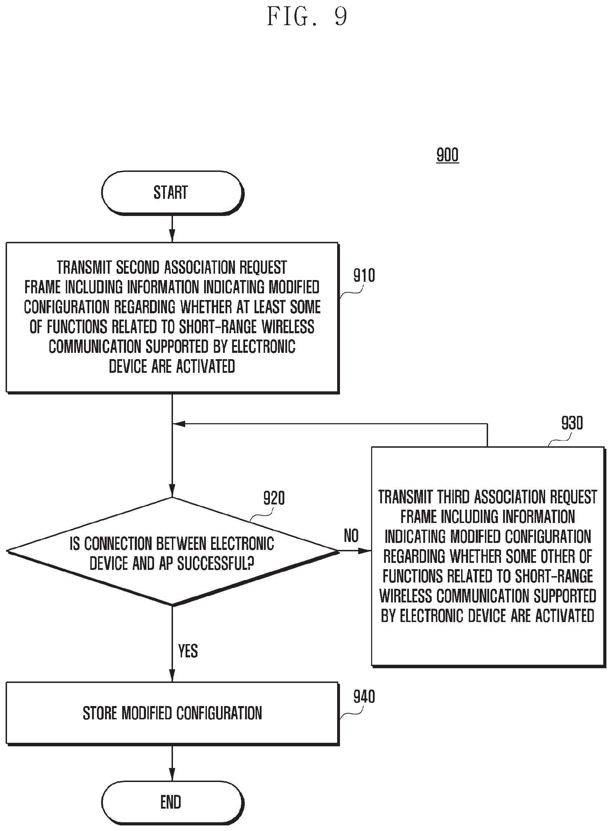

FIG. 9 is a diagram illustrating an example 900 in which the electronic device according to an embodiment transmits the second association request frame including information indicating the configuration that modifies whether at least some of functions of the short-range wireless communication supportable by the electronic device are activated.

In operation 910, the electronic device (e.g., the electronic device 100 of FIG. 5) may transmit, to the AP (e.g., the AP 401 of FIG. 4A), the second association request frame including the information indicating the modified configuration regarding whether at least some of the functions related to the short-range wireless communication supported by the electronic device 100 are activated.

The electronic device 100 may discover the AP 401 and perform the authentication operation with the discovered AP 401. When the authentication between the AP 401 and the electronic device 100 is successful, the electronic device 100 may perform the association procedure. The association procedure may refer to the procedure in which the electronic device 100 and the AP 401 negotiate the configurations related to the short-range wireless communication.

The electronic device 100 may control the communication circuit 510 to transmit the first association request frame to the AP 401. The first association request frame may include the information indicating the configuration supportable by the electronic device 100.

The AP 401 may receive the first association request frame transmitted by the electronic device 100, and configure (or set up) the short-range wireless communication between the electronic device 100 and the AP 401 based on the information indicating the configuration supportable by the electronic device 100, which is included in the first association request frame. However, the AP 401 may fail to associate between the electronic device 100 and the AP 401 for various reasons. According to one example, at least some of the configurations supportable by the electronic device 100 may conflict with the configuration supportable by the AP 401, and the association between the electronic device 100 and the AP 401 may fail. When the association between the electronic device 100 and the AP 401 fails, the AP 401 may transmit, to the electronic device 100, the association response frame indicating that the connection between the AP 401 and the electronic device 100 has failed.

The electronic device 100 may receive the association response frame indicating that the association between the AP 401 and the electronic device 100 has failed. Upon receiving the association response frame indicating that the association between the AP 401 and the electronic device 100 has failed, the electronic device 100 may end the connection procedure through the short-range wireless communication between the AP 401 and the electronic device 100.

The electronic device 100 may identify that the connection through the short-range wireless communication between the AP 401 and the electronic device 100 has failed (or that the association procedure or the authentication procedure between the AP 401 and the electronic device 100 has failed), modify the configuration related to the short-range wireless communication supportable by the electronic device 100, and reattempt to establish the connection procedure to the AP 401 based on the modified configuration.

The electronic device 100 may modify the configuration so as to modify whether at least some of the functions of the short-range wireless communication supportable by the electronic device 100 are activated, and may perform the connection procedure to the AP 401 based on the modified configuration.

The functions of the short-range wireless communication supportable by the electronic device 100 may refer to various functions that the electronic device 100 and the AP 401 may activate through the negotiation in the association procedure.

According to one example, the electronic device 100 may modify the configuration so as to modify whether at least some of the functions of the short-range wireless communication supportable by the electronic device 100 are activated, and may perform the connection procedure to the AP 401 based on the modified configuration. For example, when the electronic device 100 supports all of the BTM, beacon report, and neighbor report, the electronic device 100 may modify whether at least some (e.g., BTM) of the functions are activated (e.g., modification to deactivation), and may perform the connection procedure to the AP 401 based on the modified configuration. The electronic device 100 may store the information related to other APs as well as the AP 401 in the memory 530, and identify and/or store the main reasons when the connection fails between other APs and the electronic device 100. The electronic device 100 may configure the priority of the function whose activation is to be modified by considering the main reasons (e.g., activation of a specific function), and determine (or configure) the order of the functions whose activation is to be modified based on the priority.

In operation 920, the electronic device 100 may identify whether the connection between the electronic device 100 and the AP 401 is successful.

In operation 930, when the connection between the electronic device 100 and the AP 401 fails (operation 920-N), the electronic device 100 may transmit, to the AP 401, the third association request frame including the information indicating the modified configuration regarding whether some other of the functions related to the short-range wireless communication supported by the electronic device 100 are activated.

The electronic device 100 may modify the configuration so as to modify whether other functions among the functions of the short-range wireless communication supportable by the electronic device 100 are activated, and may perform the connection procedure to the AP 401 based on the modified configuration.

For example, when the electronic device 100 supports all of the BTM, beacon report, and neighbor report, the electronic device 100 may modify whether some other (e.g., beacon report) of the functions are activated (e.g., modification to deactivation), and may perform the connection procedure to the AP 401 based on the modified configuration.

In operation 940, when the connection between the electronic device 100 and the AP 401 is successful (operation 920-Y), the electronic device 100 may store the modified configuration in the memory 530.

The electronic device 100 controls the communication circuit 510 to transmit the second association request frame including the information indicating the modified configuration to the AP 401, and after transmitting the second association request frame, may receive, from the AP 401, the association response frame including the information indicating that the association between the electronic device 100 and the AP 401 is successful. When the association between the electronic device 100 and the AP 401 is successful, the electronic device 100 may store the used modified configuration in the memory 530. The electronic device 100 may be connected to the AP 401 through the short-range wireless communication using the modified configuration for the designated time. After the designated time has expired, the electronic device 100 may reattempt to establish the connection to the AP 401 using the scheme that transmits, to the AP 401, the association request frame including the configuration related to the short-range wireless communication supported by the electronic device 100, not the modified configuration. When the electronic device 100 is successfully connected to the AP 401, the electronic device 100 may be connected to the AP 401 through the short-range wireless communication based on the configuration included in the first association request frame, not the modified configuration. When the electronic device 100 fails in connecting to the AP 401, the electronic device 100 may be connected to the AP 401 through the short-range wireless communication based on the modified configuration.

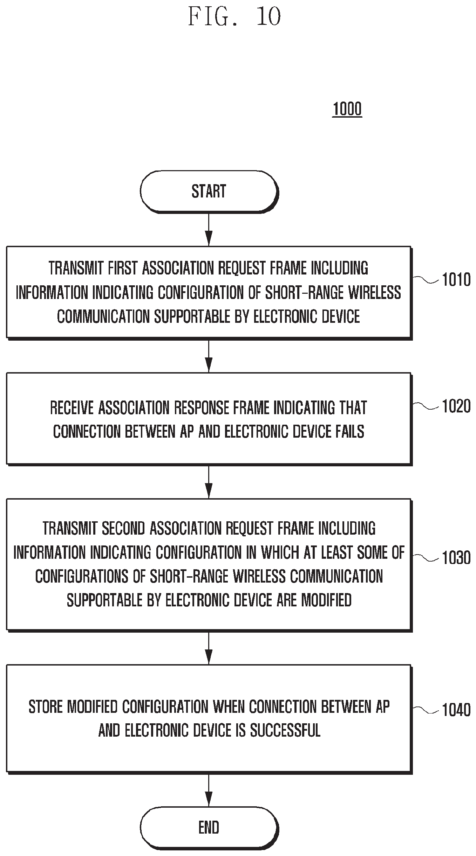

FIG. 10 is an operational flowchart 1000 illustrating a method for operating an electronic device according to an embodiment.

In operation 1010, the electronic device (e.g., the electronic device 100 of FIG. 5) may transmit, to the AP (e.g., the AP 401 of FIG. 4A), the first association request frame including the information indicating the configuration of the short-range wireless communication supportable by the electronic device 100.

The electronic device 100 may discover the AP 401 in order to perform the short-range wireless communication provided by the AP 401. The electronic device 100 may control the communication circuit 510 to broadcast the probe request message in order to search for an AP.

The probe request message may include the information on the electronic device 100. According to one example, the probe request message may include various types of identification information (e.g., MAC address) that may distinguish the electronic device 100 from other electronic devices, and/or the performance information related to the short-range wireless communication of the electronic device 100. When receiving the probe request message, the AP 401 may transmit the probe response message corresponding to the probe request message to the electronic device 100. The electronic device 100 may be successful in searching for the AP 401 when receiving the probe response message.

The electronic device 100 may perform the authentication procedure with the discovered AP 401. The electronic device 100 may control the communication circuit 510 to transmit the authentication request frame to the AP 401.

According to an embodiment, the authentication frame may include the information on the authentication algorithm number, the authentication transaction sequence number, the status code, the challenge text, the robust security network (RSN), and/or the finite cyclic group.

The electronic device 100 may discover the AP 401 and perform the authentication operation with the discovered AP 401. When the authentication between the AP 401 and the electronic device 100 is successful, the electronic device 100 may perform the association procedure. The association procedure may refer to the procedure in which the electronic device 100 and the AP 401 negotiate the configurations related to the short-range wireless communication.

The electronic device 100 may control the communication circuit 510 to transmit the first association request frame to the AP 401. The first association request frame may include the information indicating the configuration supportable by the electronic device 100.

According to one example, the first association request frame may include protocol information of the short-range wireless communication supportable by the electronic device 100. For example, when the communication circuit 510 supports all the short-range wireless communications including Wi-Fi 7, the electronic device 100 may transmit, to the AP 401, the first association request frame indicating that the electronic device 100 supports Wi-Fi 7, Wi-Fi 6E, Wi-Fi 5, Wi-Fi 4, Wi-Fi 3, Wi-Fi 2, and/or Wi-Fi 1.

According to one example, the first association request frame may include information indicating a security type of the short-range wireless communication supportable by the electronic device 100. For example, when the communication circuit 510 supports an encryption scheme using any one of Wi-Fi protected access 3 (WPA 3), WPA2, WAP1, fast-time phase shift keying (FT-PSK), PSK, and/or OWE, the electronic device 100 may transmit, to the AP 401, the first association request frame indicating that the communication circuit 510 supports the Wi-Fi protected access 3 (WPA 3), the WPA2, the WAP1, the fast-time phase shift keying (FT-PSK), the PSK, and/or the OWE.

According to one example, the first association request frame may include information indicating whether to activate functions of the short-range wireless communication supportable by the electronic device 100. The functions of the short-range wireless communication supportable by the electronic device 100 may refer to various functions that the electronic device 100 and the AP 401 may activate through the negotiation in the association procedure. For example, the functions of the short-range wireless communication may include at least one of the BSS transition management (BTM), the beacon report, or the neighbor report that may report information on neighboring APs. Examples of the association request frame includes the information related to various capabilities, and the information related to the beacon listening interval, the service set identifier (SSID), the supported rates, the supported channels, the RSN, the mobility domain, the supported operating classes, the traffic indication map (TIM) broadcast request, and/or the interworking service capability.

In operation 1020, the electronic device 100 may receive the association response frame indicating that the connection between the AP 401 and the electronic device 100 has failed.

The AP 401 may receive the first association request frame transmitted by the electronic device 100, and configure (or set up) the short-range wireless communication between the electronic device 100 and the AP 401 based on the information indicating the configuration supportable by the electronic device 100, which is included in the first association request frame. However, the AP 401 may fail to associate between the electronic device 100 and the AP 401 for various reasons. According to one example, at least some of the configurations supportable by the electronic device 100 may conflict with the configuration supportable by the AP 401, and the association between the electronic device 100 and the AP 401 may fail. When the association between the electronic device 100 and the AP 401 fails, the AP 401 may transmit, to the electronic device 100, the association response frame indicating that the connection between the AP 401 and the electronic device 100 has failed.

The electronic device 100 may receive the association response frame indicating that the association between the AP 401 and the electronic device 100 has failed. Upon receiving the association response frame indicating that the association between the AP 401 and the electronic device 100 has failed, the electronic device 100 may end the connection procedure through the short-range wireless communication between the AP 401 and the electronic device 100. The electronic device 100 may be connected to an AP other than the AP 401 through the short-range wireless communication and perform a service using the short-range wireless communication, or the electronic device 100 may perform a service using the short-range wireless communication and other wireless communication (e.g., cellular wireless communication).

The electronic device 100 may store, in the memory 530, the information related to an AP that has failed to connect to the electronic device 100 through the short-range wireless communication.

According to one example, the information related to the AP that has failed to connect includes at least one of the status code included in the association response frame received from the AP 401 when the connection has failed, information (e.g., Wi-Fi 7, Wi-Fi 6, Wi-Fi 5, Wi-Fi 4, Wi-Fi 3, Wi-Fi 2, and/or Wi-Fi 1) indicating a protocol of the short-range wireless communication supportable by the AP 401 and/or the electronic device 100, information (e.g., Wi-Fi protected access 3 (WPA 3), WPA2, WAP1, fast-time phase shift keying (FT-PSK), PSK, and/or OWE) indicating a security type of the short-range wireless communication supportable by the AP 401 and/or the electronic device 100, a function (e.g., BTM, beacon report, and/or neighbor report) of the short-range wireless communication supportable by the AP 401 and/or the electronic device 100, identification information (e.g., MAC address, BSSID) of the AP and/or the electronic device 100, a configuration used when the connection was successful if there is a history of the successful connection between the AP 401 and the electronic device 100, or the number of times the AP 401 and the electronic device 100 failed to connect.

The electronic device 100 may identify that the connection through the short-range wireless communication between the AP 401 and the electronic device 100 has failed (or that the association procedure or the authentication procedure between the AP 401 and the electronic device 100 has failed), modify the configuration related to the short-range wireless communication supportable by the electronic device 100, and reattempt to establish the connection procedure to the AP 401 based on the modified configuration.

In operation 1030, the electronic device 100 may transmit the second association request frame to the AP 401 that includes the information indicating the configuration in which at least some of the configurations of the short-range wireless communication supportable by the electronic device 100 are modified.

The electronic device 100 may modify the configuration to support other protocols except for at least one of the protocols of the short-range wireless communication supportable by the electronic device 100 (or not to support at least one protocol), and may perform the connection procedure to the AP 401 based on the modified configuration.

According to one example, the electronic device 100 may modify the configuration to support other protocols except for the protocol corresponding to the highest generation among the protocols of the short-range wireless communication supportable by the electronic device 100 (or not to support the protocol corresponding to the highest generation), and may perform the connection procedure to the AP 401 based on the modified configuration. For example, when the electronic device 100 supports all of the Wi-Fi 1, Wi-Fi 2, Wi-Fi 3, Wi-Fi 4, Wi-Fi 5, Wi-Fi 6, Wi-Fi 6E, and Wi-Fi 7, the electronic device 100 may modify the configuration to support other protocols except for Wi-Fi 7, which is the highest generation, and may perform the connection procedure to the AP 401 based on the modified configuration. Considering the possibility that compatibility issues (or problems) may occur between the AP 401 and the electronic device 100 as the highest generation (or the latest) protocol is used, the electronic device 100 may modify the configuration to support other protocols except for the protocol corresponding to the highest generation among the protocols of the short-range wireless communication supportable by the electronic device 100 (or not to support the protocol corresponding to the highest generation), and may perform the connection procedure to the AP 401 based on the modified configuration.

The electronic device 100 may perform the association procedure between the AP 401 and the electronic device 100 based on the modified configuration, and may identify that the association procedure between the AP 401 and the electronic device 100 has failed again. The electronic device 100 may identify that the association procedure between the AP 401 and the electronic device 100 has failed again by receiving, from the AP 401, the association response frame indicating that the association procedure has failed.

When the association procedure between the AP 401 and the electronic device 100 fails again, the electronic device 100 may modify the configuration to support other protocols except for the protocol corresponding to the highest generation and the protocol corresponding to the second highest generation among the protocols of the short-range wireless communication supportable by the electronic device 100, and may perform the connection procedure to the AP 401 based on the modified configuration. For example, when the electronic device 100 supports all of the Wi-Fi 1, Wi-Fi 2, Wi-Fi 3, Wi-Fi 4, Wi-Fi 5, Wi-Fi 6, Wi-Fi 6E, and Wi-Fi 7, the electronic device 100 may modify the configuration to support other protocols except for the highest generation, Wi-Fi 7, and the second highest generation, Wi-Fi 6E, and may perform the connection procedure to the AP 401 based on the modified configuration.

When the connection procedure between the AP 401 and the electronic device 100 fails again, the electronic device 100 may sequentially modify the configuration so as not to support the protocol corresponding to the next higher generation, and may perform the connection procedure to the AP 401 based on the modified configuration.

The electronic device 100 may modify the configuration to support (or not to support at least one security type) other security types except for at least one of the security types of the short-range wireless communication supportable by the electronic device 100, and may perform the connection procedure to the AP 401 based on the modified configuration.

According to one example, the electronic device 100 may modify the configuration to support (or not to support the security type corresponding to the highest generation) other security types except for the security type with the highest security among the security types of the short-range wireless communication supportable by the electronic device 100, and may perform the connection procedure to the AP 401 based on the modified configuration. For example, when the electronic device 100 supports all of the Wi-Fi protected access 3 (WPA 3), WPA2, WAP1, fast-time phase shift keying (FT-PSK), PSK, and OWE, the electronic device 100 may modify the configuration to support other security types except for the security type with the highest security (e.g., WPA3), and may perform the connection procedure to the AP 401 based on the modified configuration. Considering the possibility that the compatibility issues (or problems) may occur between the AP 401 and the electronic device 100 as the security type with higher security is used, the electronic device 100 may modify the configuration to support (or not to support the security type with the highest security) other security types except for the security type with the highest security among the security types of the short-range wireless communication supportable by the electronic device 100, and may perform the connection procedure to the AP 401 based on the modified configuration.

The electronic device 100 may perform the association procedure between the AP 401 and the electronic device 100 based on the modified configuration, and may identify that the association procedure between the AP 401 and the electronic device 100 has failed again. The electronic device 100 may identify that the association procedure between the AP 401 and the electronic device 100 has failed again by receiving, from the AP 401, the association response frame indicating that the association procedure has failed.

When the association procedure between the AP 401 and the electronic device 100 fails again, the electronic device 100 may modify the configuration to support other security types except for the security type with the highest security and the security type with the second highest security among the security types of the short-range wireless communication supportable by the electronic device 100, and may perform the connection procedure to the AP 401 based on the modified configuration. For example, when the electronic device 100 supports all of the Wi-Fi protected access 3 (WPA 3), WPA2, WAP1, fast-time phase shift keying (FT-PSK), PSK, and OWE, the electronic device 100 may modify the configuration to support other security types except for the security type WPA3 with the highest security and the security type WPA 2 with the second highest security, and may perform the connection procedure to the AP 401 based on the modified configuration.

When the connection procedure between the AP 401 and the electronic device 100 fails again, the electronic device 100 may sequentially modify the configuration so as not to support the security type having the next higher security, and may perform the connection procedure to the AP 401 based on the modified configuration.

The electronic device 100 may modify the configuration so as to modify whether at least some of the functions of the short-range wireless communication supportable by the electronic device 100 are activated, and may perform the connection procedure to the AP 401 based on the modified configuration.

The functions of the short-range wireless communication supportable by the electronic device 100 may refer to various functions that the electronic device 100 and the AP 401 may activate through the negotiation in the association procedure.

According to one example, the electronic device 100 may modify the configuration so as to modify whether at least some of the functions of the short-range wireless communication supportable by the electronic device 100 are activated, and may perform the connection procedure to the AP 401 based on the modified configuration. For example, when the electronic device 100 supports all of the BTM, beacon report, and neighbor report, the electronic device 100 may modify whether at least some (e.g., BTM) of the functions are activated (e.g., modification to deactivation), and may perform the connection procedure to the AP 401 based on the modified configuration. The electronic device 100 may store the information related to other APs as well as the AP 401 in the memory 530, and identify and/or store the main reasons when the connection fails between other APs and the electronic device 100. The electronic device 100 may configure the priority of the function whose activation is to be modified by considering the main reasons (e.g., activation of a specific function), and determine (or configure) the order of the functions whose activation is to be modified based on the priority.

The electronic device 100 may attempt to establish the connection to the AP 401 using the scheme that modifies the protocol of the short-range wireless communication, the security type of the short-range wireless communication, and/or whether the function of the short-range wireless communication is activated. The electronic device 100 may attempt to establish the connection to the AP 401 by controlling the communication circuit 510 to transmit the second association request frame including the information indicating the modified configuration to the AP 401.

In operation 1040, when the connection between the AP 401 and the electronic device 100 is successful, the electronic device 100 may store the modified configuration in the memory 530.

The electronic device 100 controls the communication circuit 510 to transmit the second association request frame including the information indicating the modified configuration to the AP 401, and after transmitting the second association request frame, may receive, from the AP 401, the association response frame including the information indicating that the association between the electronic device 100 and the AP 401 is successful. When the association between the electronic device 100 and the AP 401 is successful, the electronic device 100 may store the used modified configuration in the memory 530. The electronic device 100 may be connected to the AP 401 through the short-range wireless communication using the modified configuration for the designated time. After the designated time has expired, the electronic device 100 may reattempt to establish the connection to the AP 401 using the scheme that transmits, to the AP 401, the association request frame including the configuration related to the short-range wireless communication supported by the electronic device 100, not the modified configuration. When the electronic device 100 is successfully connected to the AP 401, the electronic device 100 may be connected to the AP 401 through the short-range wireless communication based on the configuration included in the first association request frame, not the modified configuration. When the electronic device 100 fails in connecting to the AP 401, the electronic device 100 may be connected to the AP 401 through the short-range wireless communication based on the modified configuration.

According to an embodiment, the electronic device may include the communication circuit 510 supporting the short-range wireless communication. The electronic device may include the memory 530 that stores at least one computer program. The electronic device may include at least one processor 520. The at least one computer program may store instructions that, when executed by the at least one processor 520 individually or collectively, may cause the electronic device to transmit, to the AP 401, the first association request frame including the configuration supportable by the electronic device, in the procedure of connecting the electronic device to the AP 401. The instructions, when executed by the at least one processor 520 individually or collectively, may cause the electronic device to receive, from the AP 401, the association response frame indicating that the connection between the AP 401 and the electronic device has failed. The instructions, when executed by the at least one processor 520 individually or collectively, may cause the electronic device to transmit, to the AP 401, the second association request frame including the configuration in which at least some of the configurations supportable by the electronic device are modified. The above instructions, when executed by the at least one processor 520 individually or collectively, may cause the electronic device to store the modified configuration in the memory 530 when the connection between the AP 401 and the electronic device is successful.

In the electronic device according to an example, the instructions, when executed by the at least one processor 520 individually or collectively, may cause the electronic device to transmit, to the AP 401, the second association request frame including the modified configuration that excludes information indicating support for at least one of protocol from the pieces of information indicating each protocol of the short-range wireless communication supported by the electronic device.

In the electronic device according to an example, the instructions, when executed by the at least one processor 520 individually or collectively, may cause the electronic device to transmit, to the AP 401, the second association request frame including the modified configuration that excludes information supporting the highest generation protocol among the protocols from the pieces of information indicating each protocol of the short-range wireless communication supported by the electronic device.

In the electronic device according to one example, the instructions, when executed by the at least one processor 520 individually or collectively, may cause the electronic device to receive the association response frame indicating that the connection between the AP 401 and the electronic device has failed after transmitting the second association request frame. The instructions, when executed by the at least one processor 520 individually or collectively, may cause the electronic device to transmit, to the AP 401, the third association request frame including the modified configuration that excludes information supporting the highest generation protocol and the second highest generation protocol among the protocols from the pieces of information indicating each protocol of the short-range wireless communication supported by the electronic device.

In the electronic device according to an example, the instructions, when executed by the at least one processor 520 individually or collectively, cause the electronic device to transmit, to the AP 401, the second association request frame including the modified configuration that excludes information supporting at least one of the plurality of security types supported by the electronic device.

In the electronic device according to an example, the instructions, when executed by the at least one processor 520 individually or collectively, may cause the electronic device to transmit, to the AP 401, the second association request frame including the modified configuration that excludes information supporting a security type with the highest security among the plurality of security types supported by the electronic device.

In the electronic device according to an example, the instructions, when executed by the at least one processor 520 individually or collectively, may cause the electronic device to transmit, to the AP 401, the second association request frame including the modified configuration indicating that at least some of functions related to the short-range wireless communication supported by the electronic device is deactivated.

In the electronic device according to an example, the instructions, when executed by at least one processor 520 individually or collectively, may cause the electronic device to transmit the second association request frame to the AP 401 when the electronic device does not perform a service using the short-range wireless communication.

In the electronic device according to an example, the instructions, when executed by the at least one processor 520 individually or collectively, may cause the electronic device to perform the short-range wireless communication with the AP 401 based on the information indicating the modified configuration for the designated time after the connection between the AP 401 and the electronic device is successful. The instructions, when executed by the at least one processor 520 individually or collectively, may cause the electronic device to transmit, to the AP 401, a fourth association request frame indicating the configuration supportable by the electronic device after the designated time. The instructions, when executed by the at least one processor 520 individually or collectively, may cause the electronic device to connect to the AP 401 based on the modified configuration when receiving, from the AP 401, the association response frame indicating that the connection between the AP 401 and the electronic device has failed. The configuration supportable by the electronic device, which is included in the fourth association request frame, may be the same as the configuration supportable by the electronic device, which is included in the first association request frame.

In the electronic device according to one example, the instructions, when executed by the at least one processor 520 individually or collectively, may cause the electronic device to transmit the second association request frame to the AP 401 when the status code included in the association response frame, which indicates the reason for the connection failure of the electronic device, is not the designated status code.

In the electronic device according to an example, the designated status code may include the status code indicating that the connection through the short-range wireless communication between the AP 401 and the electronic device may not performed non-temporarily and/or the status code indicating that the pairwise master key identifier (PMKID) included in the first association request frame is invalid.

In the recording medium storing at least one program including instructions that, when executed by at least one processor 520 of the electronic device individually or collectively, may cause the electronic device to perform the following operations, the instructions, when executed by the at least one processor 520 individually or collectively, may cause the electronic device to transmit, the AP 401, the first association request frame including the configuration supportable by the electronic device, in the procedure of connecting the AP 401 to the electronic device. The instructions, when executed by the at least one processor 520 individually or collectively, may cause the electronic device to receive, from the AP 401, the association response frame indicating that the connection between the AP 401 and the electronic device has failed. The instructions, when executed by the at least one processor 520 individually or collectively, may cause the electronic device to transmit, to the AP 401, the second association request frame including the configuration in which at least some of the configurations supportable by the electronic device are modified. The instructions, when executed by the at least one processor 520 individually or collectively, may cause the electronic device to store the modified configuration in the memory of the electronic device when the connection between the AP 401 and the electronic device is successful.

In the recording medium according to an example, the instructions, when executed by the at least one processor 520 individually or collectively, may cause the electronic device to transmit, to the AP 401, the second association request frame including the modified configuration that excludes information indicating support for at least one protocol from the pieces of information indicating each protocol of the short-range wireless communication supported by the electronic device.

In the recording medium according to an example, the instructions, when executed by the at least one processor 520 individually or collectively, cause the electronic device to transmit, to the AP 401, the second association request frame including the modified configuration that excludes information supporting at least one of the plurality of security types supported by the electronic device.

In the recording medium according to an example, the instructions, when executed by the at least one processor 520 individually or collectively, may cause the electronic device to transmit, to the AP 401, the second association request frame including the modified configuration indicating that at least some of functions related to the short-range wireless communication supported by the electronic device is deactivated.

In the recording medium according to an example, the instructions, when executed by at least one processor 520 individually or collectively, may cause the electronic device to transmit the second association request frame to the AP 401 when the electronic device does not perform a service using the short-range wireless communication.

In the recording medium according to one example, the instructions, when executed by the at least one processor 520 individually or collectively, may cause the electronic device to transmit the second association request frame to the AP 401 when the status code included in the association response frame, which indicates the reason for the connection failure of the electronic device, is not the designated status code. The designated status code may include the status code indicating that the connection through the short-range wireless communication between the AP 401 and the electronic device is not performed non-temporarily and/or the status code indicating that the pairwise master key identifier (PMKID) included in the first association request frame is invalid.

The method for operating an electronic device according to an embodiment may include transmitting, to the AP 401, the first association request frame including the configuration supportable by the electronic device, in the procedure of connecting the AP 401 to the electronic device. The method for operating an electronic device may include receiving, from the AP 401, the association response frame indicating that the connection between the AP 401 and the electronic device has failed. The method for operating an electronic device may include transmitting, to the AP 401, the second association request frame including the information indicating the configuration in which at least some of the configurations supportable by the electronic device are modified. The method for operating an electronic device may include storing the modified configuration in the memory of the electronic device when the connection between the AP 401 and the electronic device is successful.

In the method for operating an electronic device according to one example, the transmitting of the second association request frame to the AP 401 may include transmitting, to the AP (401), the second association request frame including the modified configuration that excludes information supporting at least one protocol from the pieces of information indicating each protocol of short-range wireless communication supported by the electronic device.

In the method for operating an electronic device according to one example, the transmitting of the second association request frame to the AP 401 may include transmitting, to the AP 401, the second association request frame including the modified configuration that excludes information supporting at least one of the plurality of security types supported by the electronic device.

## Claims

1. An electronic device comprising:
communication circuitry supporting short-range wireless communication;
memory storing at least one computer program; and
at least one processor,
wherein the at least one computer program includes instructions which, when executed by the at least one processor individually or collectively, cause the electronic device to:
transmit, to an access point, AP, a first association request frame including information indicating configuration supported by the electronic device,
receive, from the AP, an association response frame indicating that a connection between the AP and the electronic device has failed,
transmit, to the AP, a second association request frame including a modified configuration, in which at least part of the configuration is changed,
store the modified configuration if the connection between the AP and the electronic device is successful.

2. The electronic device of claim 1, wherein the instructions, when executed by the at least one processor individually or collectively, cause the electronic device to:transmit, to the AP, the second association request frame including the modified configuration in which information indicating that at least one short-range wireless communication protocol is excluded among information indicating the short-range wireless communication protocols supported by the electronic device.

3. The electronic device of claim 1 and 2, wherein the instructions, when executed by the at least one processor individually or collectively, cause the electronic device to:
transmit, to the AP, the second association request frame including the modifiedconfiguration in which information indicating that the highest generation of the protocol is excluded among information indicatingthe short-range wireless communication protocols supported by the electronic device.

4. The electronic device of any one of claims 1 to 3, wherein the instructions, when executed by the at least one processor individually or collectively, cause the electronic device to:
receive, from the AP, a further association response frame indicating that the connection between the AP and the electronic device has failed, after the second association request frame is transmitted,
transmit, to the AP, a third association request frame including the modified configuration in which information indicating that highest generation of the protocol and information indicating that second highest generation of the protocol are excluded among information indicating the protocols of the short-range wireless communication protocols supported by the electronic device.

5. The electronic device of any one of claims 1 to 4, wherein the instructions, when executed by the at least one processor individually or collectively, cause the electronic device to:
transmit, to the AP, the second association request frame including the modified configuration in which information indicating that at least one short-range wireless communication security type is excluded among information indicating security types of the short-range wireless communication security types supported by the electronic device.

6. The electronic device of any one of claim 1 to 5, wherein the instructions, when executed by the at least one processor individually or collectively, cause the electronic device to:
transmit, to the AP, the second association request frame including the modified configuration in which information indicating that a security type having the highest security is excluded among information indicating short-range wireless communication security types supported by the electronic device.

7. The electronic device of any one of claims 1 to 6, wherein the modified configuration indicates that at least part of a function among functions supported by the electronic device is deactivated.

8. The electronic device of any one of claims 1 to 7, wherein the instructions, when executed by the at least one processor individually or collectively, cause the electronic device to:
transmit, to the AP, the second association request frame if the electronic device does not perform a service using short-range wireless communication.

9. The electronic device of any one of claims 1 to 8, wherein the instructions, when executed by the at least one processor individually or collectively, cause the electronic device to:
perform short-range wireless communication with the AP during a designated time after the connection between the AP and the electronic device is successful,
transmit, to the AP, a fourth association request frame indicating a configuration that the electronic device supports, and
if the electronic device receives the association response frame indicating that the connection between the AP and the electronic device has failed, re-connect the AP based on the modified configuration.

10. The electronic device of any one of claims 1 to 9, wherein the instructions, when executed by the at least one processor individually or collectively, cause the electronic device to:
transmit, to the AP, the second association request frame if a status code included in the association response frame is not a designated status code, the status code indicating a reason for failure of the connection between the AP and the electronic device.

11. The electronic device of claim 10, wherein the designated status code includes a status code indicating that the connection between the AP and the electronic device has temporarily failed and/or a status code indicating that a pairwise master key identifier (PMKID) included in the first association request frame is invalid.

12. A method of operating an electronic device, comprising:
in a procedure of connecting an access point, AP, (401) to the electronic device,
transmitting, to the AP, (401), a first association request frame including a configuration supported by the electronic device;
receiving, from the AP (401), an association response frame indicating that the connection between the AP (401) and the electronic device has failed;
transmitting, to the AP (401), a second association request frame including information indicating a modified configuration in which at least part of the configuration is modified; and
storing the modified configuration in memory of the electronic device when the connection between the AP (401) and the electronic device is successful.

13. The method of claim 12, wherein the transmitting of the second association request frame to the AP 401 includes transmitting, to the AP (401), the second association request frame including the modified configuration excludes information supporting at least one protocol from pieces of information indicating each short-range wireless communication protocol supported by the electronic device.

14. The method of claim 12 or 13, wherein the transmitting of the second association request frame to the AP 401 includes transmitting, to the AP (401), the second association request frame including the modified configuration excludes information regarding at least one of a plurality of security types supported by the electronic device.

15. A non-transitory medium comprising instructions, which when executed by at least one processor of an electronic device individually or collectively, cause the electronic device to perform the method of any one of claims 12 to 14.
